(19) **Europäisches Patentamt**
**European Patent Office**
**Office européen des brevets**

(11) **EP 2 432 637 B1**

(12) **FASCICULE DE BREVET EUROPEEN**

(45) Date de publication et mention
de la délivrance du brevet:
**14.03.2018 Bulletin 2018/11**

(51) Int Cl.:
***B32B 17/10*** (2006.01)   ***B60R 13/08*** (2006.01)
***G10K 11/168*** (2006.01)   ***G01N 19/00*** (2006.01)
***G01N 3/08*** (2006.01)

(21) Numéro de dépôt: **10730197.0**

(22) Date de dépôt: **17.05.2010**

(86) Numéro de dépôt international:
**PCT/FR2010/050944**

(87) Numéro de publication internationale:
**WO 2010/133790 (25.11.2010 Gazette 2010/47)**

(54) **PROCEDE DE SELECTION D'UN INTERCALAIRE POUR UN AMORTISSEMENT VIBRO-ACOUSTIQUE, INTERCALAIRE POUR UN AMORTISSEMENT VIBRO-ACOUSTIQUE ET VITRAGE COMPRENANT UN TEL INTERCALAIRE**

VORGEHENSWEISE ZUR AUSWAHL EINER ZWISCHENSCHICHT FÜR EINEN AKUSTISCHEN SCHWINGUNGSDÄMPFER, ZWISCHENSCHICHT FÜR EINEN AKUSTISCHEN SCHWINGUNGSDÄMPFER UND VERGLASUND, DIE EINE SOLCHE ZWISCHENSCHICHT ENTHÀLT

METHOD FOR THE SELECTION OF AN INTERLAYER FOR AN ACOUSTIC ATTENUATOR, INTERLAYER FOR AN ACOUSTIC ATTENUATOR UND GLAZING COMPRISING SUCH AN INTERLAYER

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **19.05.2009 FR 0953304**

(43) Date de publication de la demande:
**28.03.2012 Bulletin 2012/13**

(73) Titulaire: **Saint-Gobain Glass France
92400 Courbevoie (FR)**

(72) Inventeurs:
• **REHFELD, Marc**
  **F-95460 Ezanville (FR)**
• **BOYADJIAN, Pierre**
  **F-75010 Paris (FR)**

(74) Mandataire: **Saint-Gobain Recherche
Département Propriété Industrielle
39 Quai Lucien Lefranc
93300 Aubervilliers (FR)**

(56) Documents cités:
**EP-A1- 0 844 075      WO-A1-2007/135317
FR-A1- 2 616 908      FR-A1- 2 838 517
US-A- 6 132 882       US-A1- 2006 008 658
US-B1- 6 432 522**

• **Ping Hsin-Chih: "PASSIVE VIBRATION CONTROL OF THICK ALUMINUM PLATES USING VISCOELASTIC LAYERED DAMPING", Naval Postgrade School, Monterey, California, 27 December 1991 (1991-12-27), pages 6-8, Retrieved from the Internet: URL:http://www.google.de/url?sa=t&rct=j&q= &esrc=s&frm=1&source=web&cd=3&ved=0CC4 QFjA C&url=http%3A%2F%2Fwww.dtic.mil%2Fcgi-bi n% 2FGetTRDoc%3FAD%3DADA243990&ei=EAvhU qvFA8q ItQao54GADw&usg=AFQjCNHP3qogh8gNISOC HYCv70 5T3Ia7oQ [retrieved on 2014-01-23]**

**Description**

L'invention concerne un procédé de sélection d'un intercalaire à propriété d'amortissement acoustique pour être incorporé dans un vitrage feuilleté, destiné notamment à des engins de locomotion, en particulier un véhicule automobile.

Parmi toutes les qualités concourant au confort dans les moyens de transport modernes comme les trains et les automobiles, le silence est devenu déterminant.

Le confort acoustique a été amélioré depuis plusieurs années maintenant, en traitant les bruits, tels que les bruits du moteur, de roulement ou de suspension, et cela à leur origine ou au cours de leur propagation aérienne ou dans les solides, au moyen par exemple de revêtements absorbants, de pièce de liaison en élastomère.

Les formes des véhicules ont été également modifiées pour améliorer la pénétration dans l'air et diminuer les turbulences qui sont elles-mêmes sources de bruit.

Et depuis quelques années, on s'est penché sur le rôle que pouvaient jouer les vitrages dans l'amélioration du confort acoustique, en particulier des vitrages feuilletés comportant des films intercalaires plastiques. Les vitrages feuilletés présentent en outre d'autres avantages tels que supprimer le risque de projection de fragments en cas de casse brutale, constituer un retardateur d'effraction.

Il a été mis en évidence que l'utilisation de films plastiques standard dans des vitrages feuilletés ne convenait pas dans l'amélioration du confort acoustique. Il a alors été développé des films plastiques spécifiques qui présentaient des propriétés d'amortissement permettant une amélioration du confort acoustique.

Dans la description qui suit, la référence à un film amortissant est relative à un film plastique viscoélastique qui assure un amortissement amélioré des vibrations afin de procurer au vitrage une fonction de réduction des bruits.

Il a été montré que les performances acoustiques d'un vitrage dépendent de la valeur du facteur de perte tan $\delta$ du matériau constituant le film intercalaire. Le facteur de perte est le ratio entre l'énergie dissipée sous forme calorique et l'énergie de déformation élastique ; il caractérise la capacité du matériau à dissiper l'énergie. Plus le facteur de perte est fort, plus l'énergie dissipée est importante, plus le matériau joue donc sa fonction d'amortissement.

Ce facteur de perte varie en fonction de la température et de la fréquence. Pour une fréquence donnée, le facteur de perte atteint sa valeur maximale à une température, dite température de transition vitreuse.

Les matériaux utilisés en tant qu'intercalaires de vitrages feuilletés sont des films plastiques viscoélastiques, de type polymères acryliques ou résines d'acétal ou encore polyuréthane par exemple, qui présentent un facteur de perte assez élevé, tel qu'au moins supérieur à 0,6 pour une plage donnée de températures et pour une plage donnée de fréquences.

Le facteur de perte tan $\delta$ est estimé à l'aide d'un viscoanalyseur. Le viscoanalyseur est un appareil qui permet de soumettre un échantillon de matériau à des sollicitations de déformations dans des conditions précises de températures et de fréquences, et ainsi d'obtenir et de traiter l'ensemble des grandeurs rhéologiques caractérisant le matériau.

Il a également été décrit, concernant l'intégration d'un intercalaire amortissant dans un vitrage feuilleté, que le facteur de perte tan $\delta$ ne doit pas être considéré seul mais que le module de cisaillement G' constitue une autre caractéristique à prendre en compte dans la propriété amortissante de l'intercalaire. Le document EP-A-844 075 enseigne que, pour amortir les vibrations, l'intercalaire du vitrage feuilleté doit répondre à des valeurs particulières quant au module de cisaillement G' et au facteur de perte tan $\delta$. On rappelle que le module de cisaillement G' caractérise la rigidité du matériau ; plus G' est élevé, plus le matériau est raide, et plus G' est faible, plus le matériau est souple. Le module de cisaillement dépend de la température et de la fréquence. Le module de cisaillement G' est également estimé à l'aide d'un viscoanalyseur. Ce document décrit que le facteur de perte tan $\delta$ de l'intercalaire est supérieur à 0,6 et le module de cisaillement G' de l'intercalaire est inférieur à $2.10^7$ Pa pour des températures comprises entre 10°C et 60°C et des fréquences comprises entre 50 Hz et 10 000 Hz, afin d'amortir plus particulièrement les bruits d'origine solidienne.

Par ailleurs, lorsque le vitrage feuilleté est utilisé comme pare-brise, il est soumis à des vibrations acoustiques qui lui sont propres. Ainsi, les quatre premières fréquences propres du pare-brise, et en particulier les deuxième et troisième fréquences propres du pare-brise, comprises entre 100 Hz et 240 Hz, sont particulièrement gênantes acoustiquement parlant. L'intercalaire du document EP-A-844 075 est adéquat pour l'amortissement des bruits solidiens, mais pas pour l'amortissement vibro-acoustique des premières fréquences propres du pare-brise, en particulier les deuxième et troisième fréquences propres.

Il y a donc un besoin pour un procédé de sélection d'un intercalaire qui permette d'optimiser l'amortissement des premières fréquences propres d'un pare-brise, en particulier des deuxième et troisième fréquences propres du pare-brise, sans alourdir le pare-brise.

Pour cela, l'invention propose un procédé de sélection d'un intercalaire plastique viscoélastique comprenant deux couches externes et une couche centrale et destiné à être incorporé entre deux feuilles de verre d'un vitrage, le procédé comprenant les étapes suivantes :

- on fournit un premier élément en matériau plastique viscoélastique destiné à constituer la couche centrale et un deuxième élément en matériau plastique viscoélastique destiné à constituer les couches externes,

- on mesure le module de cisaillement G' du premier élément et du deuxième élément grâce à un visco-analyseur,
- on sélectionne le matériau du deuxième élément uniquement si son module de cisaillement G' est supérieur ou égal à $3.10^7$ Pa à 20°C et pour une gamme de fréquences comprise entre 100 Hz et 240 Hz,
- on fixe l'épaisseur h du premier élément telle que h est inférieure ou égale à 0,3 mm et que le paramètre de cisaillement g=G'/h, G' étant le module de cisaillement, est compris entre $8.10^8$ Pa/m et $2,67.10^9$ Pa/m à 20°C et pour une gamme de fréquences comprise entre 100 Hz et 240 Hz.

Selon une autre particularité, on fixe l'épaisseur h du premier élément telle que h est inférieure ou égale à 0,1 mm et que G'/h est compris entre $1,33.10^9$ Pa/m et $2.10^9$ Pa/m à 20°C et pour une gamme de fréquences comprise entre 100 Hz et 240 Hz.

Selon une autre particularité, le procédé comprend en outre, avant l'étape de fixation de l'épaisseur h, les étapes suivantes :

- on mesure le facteur de perte tan $\delta$ du premier élément grâce au visco-analyseur,
- on sélectionne le premier élément uniquement si son facteur de perte tan $\delta$ est supérieur à 0,6.

Selon une autre particularité, le procédé comprend en outre l'étape suivante :

- on sélectionne le matériau du deuxième élément uniquement si son module de cisaillement G' est compris entre $10^8$ Pa et $2.10^8$ Pa à 20°C et pour une gamme de fréquences comprise entre 100 Hz et 240 Hz.

Selon une autre particularité, le procédé comprend en outre les étapes suivantes :

- on vérifie que l'adhésion du matériau du deuxième élément est compatible avec les exigences du règlement R43 en réalisant une torsion d'un échantillon d'intercalaire constitué du matériau du deuxième élément solidaire de deux feuilles de verre, en mesurant la force de torsion pour laquelle la dissociation de l'intercalaire constitué du matériau du deuxième élément avec les feuilles de verre est amorcée, et en calculant à partir de cette force la contrainte de cisaillement d'adhésion correspondante, et on compare cette valeur de la contrainte d'adhésion à une plage de valeurs admissibles pour qu'un vitrage feuilleté quelconque résiste aux efforts correspondants au règlement R43 ; et
- on fixe l'épaisseur e du deuxième élément de la façon suivante :

- on identifie un vitrage feuilleté de référence, qui résiste aux efforts correspondant au règlement R43 et qui comporte deux feuilles de verre et un intercalaire constitué du matériau du deuxième élément ;
- on détermine la résistance à la déchirure de l'intercalaire du vitrage feuilleté de référence, l'épaisseur d'intercalaire du vitrage feuilleté de référence et l'épaisseur de feuilles de verre du vitrage feuilleté de référence ;
- à l'aide d'un graphique représentatif de la résistance à la déchirure d'intercalaire minimale requise pour qu'un vitrage feuilleté quelconque résiste aux efforts correspondants au règlement R43, en fonction de l'épaisseur d'intercalaire du vitrage feuilleté quelconque, ce graphique étant établi pour une épaisseur de substrat du vitrage feuilleté quelconque égale à l'épaisseur de substrat dans le vitrage feuilleté de référence, on déduit l'épaisseur d'intercalaire minimale requise qui correspond à une valeur de résistance à la déchirure d'intercalaire minimale requise égale à la résistance à la déchirure de l'intercalaire du vitrage feuilleté de référence ;
- on fixe l'épaisseur e du deuxième élément telle que e soit supérieure ou égale à ladite valeur optimale d'épaisseur d'intercalaire.

Il y a également un besoin pour un intercalaire qui permette d'optimiser l'amortissement des premières fréquences propres d'un pare-brise, en particulier des deuxième et troisième fréquences propres du pare-brise, sans alourdir le pare-brise.

Pour cela, l'invention propose un intercalaire plastique viscoélastique destiné à être incorporé entre deux feuilles de verre d'un vitrage pour lui procurer des propriétés d'amortissement vibro-acoustiques, l'intercalaire comprenant :

- deux couches externes en matériau plastique viscoélastique dont le module de cisaillement G' est supérieur ou égal à $3.10^7$ Pa à 20°C et pour une gamme de fréquences comprise entre 100 Hz et 240 Hz,
- une couche centrale aux propriétés d'amortissement vibro-acoustique d'épaisseur h, telle que h est inférieure ou égale à 0,3 mm et que le paramètre de cisaillement g=G'/h de la couche centrale, G' étant le module de cisaillement, est compris entre $8.10^8$ Pa/m et $2,67.10^9$ Pa/m à 20°C et pour une gamme de fréquences comprise entre 100 Hz et 240 Hz,

la couche centrale étant entre les deux couches externes.

Selon une autre particularité, l'épaisseur h de la couche centrale est telle que h est inférieure ou égale à 0,1 mm et que G'/h est compris entre $1,33.10^9$ Pa/m et $2.10^9$ Pa/m à 20°C et pour une gamme de fréquences comprise entre 100 Hz et 240 Hz.

Selon une autre particularité, la couche centrale a un facteur de perte tan δ supérieur à 0,6.

Selon une autre particularité, les couches externes ont un module de cisaillement G' compris entre $10^8$ Pa et $2.10^8$ Pa à 20°C et pour une gamme de fréquences comprise entre 100 Hz et 240 Hz.

Selon une autre particularité, chacune des couches externes a une épaisseur e telle que :

- l'adhésion du matériau des couches externes est compatible avec les exigences du règlement R43, l'adhésion étant déterminée en réalisant une torsion d'un échantillon d'intercalaire constitué du matériau des couches externes solidaire de deux feuilles de verre, en mesurant la force de torsion pour laquelle la dissociation de l'intercalaire constitué du matériau des couches externes avec les feuilles de verre est amorcée, et en calculant à partir de cette force la contrainte de cisaillement d'adhésion correspondante, puis en comparant cette valeur de la contrainte d'adhésion à une plage de valeurs admissibles pour qu'un vitrage feuilleté quelconque résiste aux efforts correspondants au règlement R43 ; et que

- l'épaisseur e de chacune des couches externes est fixée de façon à satisfaire aux exigences du règlement R43, l'épaisseur e étant déterminée de la façon suivante :

  - on identifie un vitrage feuilleté de référence, qui résiste aux efforts correspondant au règlement R43 et qui comporte deux feuilles de verre et un intercalaire constitué du matériau des couches externes ;
  - on détermine la résistance à la déchirure de l'intercalaire du vitrage feuilleté de référence, l'épaisseur d'intercalaire du vitrage feuilleté de référence et l'épaisseur de feuilles de verre du vitrage feuilleté de référence ;
  - à l'aide d'un graphique représentatif de la résistance à la déchirure d'intercalaire minimale requise pour qu'un vitrage feuilleté quelconque résiste aux efforts correspondants au règlement R43, en fonction de l'épaisseur d'intercalaire du vitrage feuilleté quelconque, ce graphique étant établi pour une épaisseur de substrat du vitrage feuilleté quelconque égale à l'épaisseur de substrat dans le vitrage feuilleté de référence, on déduit l'épaisseur d'intercalaire minimale requise qui correspond à une valeur de résistance à la déchirure d'intercalaire minimale requise égale à la résistance à la déchirure de l'intercalaire du vitrage feuilleté de référence ;
  - on fixe l'épaisseur e de chaque couche externe telle que e soit supérieure ou égale à ladite valeur optimale d'épaisseur d'intercalaire. Selon une autre particularité, la couche centrale comprend :

- un film amortissant en matériau plastique viscoélastique A d'épaisseur $h_A$ et de paramètre de cisaillement $g_A$,
- un film amortissant en matériau plastique viscoélastique B d'épaisseur $h_B$ et de paramètre de cisaillement $g_B$,

les matériaux A et B présentant chacun sur une gamme de températures respective $t_A$ et $t_B$ et pour une fréquence comprise entre 100 Hz et 240 Hz, un facteur de perte supérieur à 0,6 et un paramètre de cisaillement compris entre $8.10^8$ Pa/m et $2,67.10^9$ Pa/m, et le film qui présente le facteur de perte le plus élevé, pour une plage donnée de températures incluse dans la gamme de températures respectivement $t_A$ ou $t_B$, présentant un paramètre de cisaillement équivalent $g_{A\ ou\ B\ eq} = g_{A\ ou\ B}.h$, $g_{A\ ou\ B}$ étant le paramètre de cisaillement du matériau constituant le film et h étant l'épaisseur de la couche centrale, qui est inférieur au paramètre de cisaillement équivalent de l'autre film pour ladite plage de température.

L'invention concerne également un vitrage comprenant :

- une feuille de verre d'épaisseur comprise entre 1,4 mm et 2,1 mm,
- une feuille de verre d'épaisseur comprise entre 1,1 mm et 1,6 mm,
- l'intercalaire décrit plus haut, l'intercalaire étant entre les feuilles de verre.

Selon une autre particularité, l'épaisseur e de chacune des couches externes et l'épaisseur totale des feuilles de verre sont telle que :

- l'adhésion du matériau des couches externes est compatible avec les exigences du règlement R43, l'adhésion étant déterminée en réalisant une torsion d'un échantillon d'intercalaire constitué du matériau des couches externes solidaire de deux feuilles de verre, en mesurant la force de torsion pour laquelle la dissociation de l'intercalaire constitué du matériau des couches externes avec les feuilles de verre est amorcée, et en calculant à partir de cette force la contrainte de cisaillement d'adhésion correspondante, puis en comparant cette valeur de la contrainte d'adhésion à une plage de valeurs admissibles pour qu'un vitrage feuilleté quelconque résiste aux efforts correspondants au règlement R43 ; et que

- l'épaisseur e de chacune des couches externes et l'épaisseur totale des feuilles de verre sont fixées de façon à satisfaire aux exigences du règlement R43 ;

elles sont déterminées de la façon suivante :

- on identifie un vitrage feuilleté de référence, qui résiste aux efforts correspondant au règlement R43 et qui comporte deux feuilles de verre et un intercalaire constitué du matériau des couches externes ;
- on détermine la résistance à la déchirure de l'intercalaire du vitrage feuilleté de référence, l'épaisseur d'intercalaire du vitrage feuilleté de référence et l'épaisseur de feuilles de verre du vitrage feuilleté de référence ;
- à l'aide d'un graphique représentatif de la résistance à la déchirure d'intercalaire minimale requise pour qu'un vitrage feuilleté quelconque résiste aux efforts correspondants au règlement R43, en fonction de l'épaisseur d'intercalaire du vitrage feuilleté quelconque et de l'épaisseur de feuilles de verre du vitrage feuilleté quelconque, on déduit une combinaison de valeurs optimales de l'épaisseur d'intercalaire et de l'épaisseur de feuilles de verre qui correspond à une valeur de résistance à la déchirure d'intercalaire minimale requise égale à la résistance à la déchirure de l'intercalaire du vitrage feuilleté de référence ;
- on fixe l'épaisseur e de chaque couche externe telle que e soit supérieure ou égale à ladite valeur optimale d'épaisseur d'intercalaire et on fixe l'épaisseur des feuilles de verre supérieure ou égale à ladite valeur optimale d'épaisseur de feuilles de verre.

L'invention concerne également un véhicule comprenant le vitrage décrit plus haut, la feuille de verre d'épaisseur comprise entre 1,4 mm et 2,1 mm étant tournée vers l'extérieur du véhicule et la feuille de verre d'épaisseur comprise entre 1,1 mm et 1,6 mm étant tournée vers l'intérieur du véhicule.

L'invention concerne également une utilisation de l'intercalaire décrit plus haut pour l'amortissement vibro-acoustique des deuxième et troisième fréquences propres d'un pare-brise constitué de deux feuilles de verres et de l'intercalaire incorporé entre les feuilles de verre.

L'invention concerne également une utilisation du vitrage décrit plus haut comme pare-brise de véhicule.

D'autres caractéristiques et avantages de l'invention vont à présent être décrits en regard des dessins sur lesquels :

- La figure 1 représente une courbe de l'amortissement modal d'un pare-brise feuilleté en fonction du paramètre de cisaillement d'une couche centrale de l'intercalaire du pare-brise feuilleté pour des fréquences comprises entre 100 Hz et 240 Hz à 20°C ;
- La figure 2 représente une vue en coupe d'un vitrage selon l'invention ;
- La figure 3 représente une vue en coupe d'un vitrage selon l'invention selon un autre mode de réalisation ;

- La figure 4 représente un graphique représentatif de la résistance à la déchirure d'intercalaire minimale requise pour qu'un vitrage feuilleté résiste aux efforts correspondant au règlement R43, en fonction de l'épaisseur d'intercalaire du vitrage feuilleté, établi pour un vitrage feuilleté comportant deux substrats en verre d'épaisseur 2,1 mm et un intercalaire de contrainte d'adhésion comprise entre 2MPa et 5MPa et pour une hauteur de chute de 4 m ;
- La figure 5 représente un graphique en trois dimensions, représentatif de la résistance à la déchirure d'intercalaire minimale requise pour qu'un vitrage feuilleté résiste aux efforts correspondant au règlement R43, en fonction à la fois de l'épaisseur d'intercalaire et de l'épaisseur de verre du vitrage feuilleté, établi pour un vitrage feuilleté comportant un intercalaire de contrainte d'adhésion comprise entre 2MPa et 5MPa et pour une hauteur de chute de 4 m ;
- La figure 6 représente une vue de face schématique d'un dispositif expérimental pour évaluer l'adhésion d'un intercalaire vis-à-vis de feuilles de verre auxquelles il est associé ;
- La figure 7 représente une vue en perspective d'une variante de dispositif pour évaluer l'adhésion d'un intercalaire vis-à-vis de feuilles de verre auxquelles il est associé ; et
- la figure 8 représente une vue schématique d'un dispositif expérimental pour évaluer la résistance à la déchirure d'un intercalaire.

Les numéros de référence qui sont identiques sur les différentes figures représentent des éléments identiques ou similaires.

Notons aussi que les bornes des intervalles donnés dans cette demande sont incluses dans les intervalles.

L'invention propose un procédé de sélection d'un intercalaire plastique viscoélastique comprenant deux couches externes et une couche centrale et destiné à être incorporé entre deux feuilles de verre d'un vitrage.

Le procédé comprend les étapes suivantes :

- on fournit un premier élément en matériau plastique viscoélastique destiné à constituer la couche centrale et un deuxième élément en matériau plastique viscoélastique destiné à constituer les couches externes,
- on mesure le module de cisaillement G' du premier élément et du deuxième élément grâce à un visco-analyseur,
- on sélectionne le matériau du deuxième élément uniquement si son module de cisaillement G' est supérieur ou égal à $3.10^7$ Pa à 20°C et pour une gamme de fréquences comprise entre 100 Hz et 240 Hz,
- on fixe l'épaisseur h du premier élément telle que h est inférieure ou égale à 0,3 mm et que le paramètre de cisaillement g=G'/h, G' étant le module de cisaillement, est compris entre $8.10^8$ Pa/m et $2,67.10^9$ Pa/m

à 20°C et pour une gamme de fréquences comprise entre 100 Hz et 240 Hz.

La plage de fréquences comprise entre 100 Hz et 240 Hz comprend les quatre premières fréquences propres d'un pare-brise feuilleté, et en particulier les deuxième et troisième fréquences propres, comme les inventeurs ont pu le mesurer par des tests sur véhicule.

De plus, les inventeurs ont mis en évidence qu'un matériau qui remplit les conditions de h et g décrites ci-dessus permet d'optimiser l'amortissement des premières fréquences propres d'un pare-brise feuilleté, en particulier des deuxième et troisième fréquences propres du pare-brise comprenant deux feuilles de verre et un intercalaire sélectionné comme décrit ci-dessus.

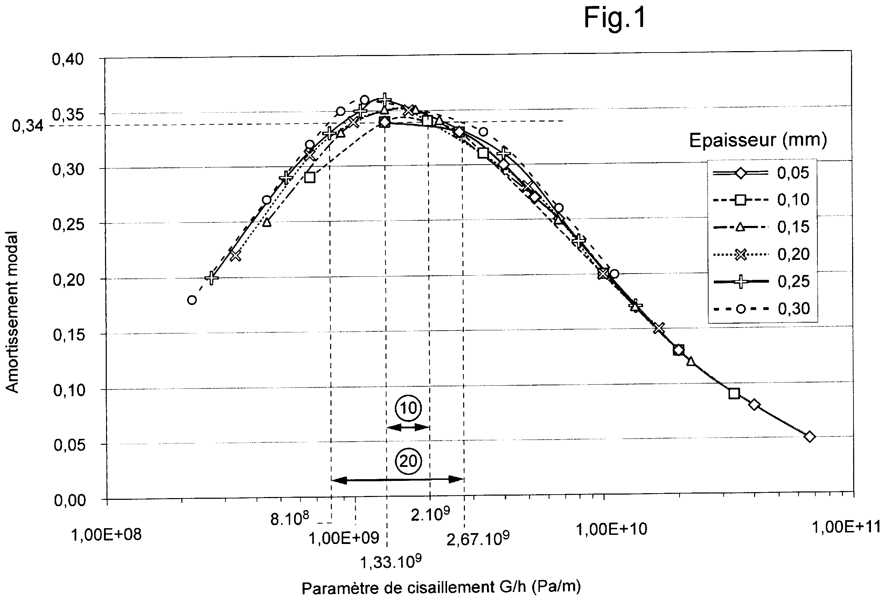

En effet, comme on le verra plus loin, en particulier lors de l'étude de la figure 1, les inventeurs ont montré que ces valeurs de g comprises entre $8.10^8$ Pa/m et $2,67.10^9$ Pa/m pour une gamme de fréquences comprise entre 100 Hz et 240 Hz, combinées à des valeurs de h inférieures ou égales à 0,3 mm, permettent d'optimiser l'amortissement acoustique des fréquences comprises entre 100 Hz et 240 Hz.

Si le matériau du premier élément est tel que son paramètre de cisaillement g ne puisse pas être compris entre $8,00.10^8$ Pa/m et $2,67.10^9$ Pa/m pour une épaisseur inférieure ou égale à 0,3 mm, le matériau n'est pas sélectionné pour réaliser l'intercalaire.

Par ailleurs, limiter l'épaisseur de la couche de matériau plastique viscoélastique à 0,3 mm permet de limiter la matière utilisée pour fabriquer l'intercalaire, ce qui permet de limiter le poids du vitrage dans lequel l'intercalaire est destiné à être incorporé pour former un pare-brise. Cela facilite la maniabilité du pare-brise et réduit la consommation en carburant d'un véhicule équipé d'un tel pare-brise.

Enfin, pour que la couche centrale vibre correctement, il est nécessaire que les couches externes soient plus rigides que la couche centrale, ce qui est réalisé avec les conditions d'élasticité telles que définies.

L'invention concerne également un intercalaire plastique viscoélastique destiné à être incorporé entre deux feuilles de verre d'un vitrage pour lui procurer des propriétés d'amortissement vibro-acoustiques, l'intercalaire comprenant :

- deux couches externes en matériau plastique viscoélastique dont le module de cisaillement G' supérieur ou égal à $3.10^7$ Pa à 20°C et pour une gamme de fréquences comprise entre 100 Hz et 240 Hz.
- une couche centrale aux propriétés d'amortissement vibro-acoustique améliorées d'épaisseur h, telle que h est inférieure ou égale à 0,3 mm et que le paramètre de cisaillement g=G'/h de la couche centrale, G' étant le module de cisaillement, est compris entre $8.10^8$ Pa/m et $2,67.10^9$ Pa/m à 20°C pour une gamme de fréquences comprise entre 100 Hz et 240 Hz.

L'intercalaire est obtenu par le procédé de sélection décrit plus haut.

L'intercalaire permet d'optimiser l'amortissement des premières fréquences propres d'un pare-brise feuilleté, en particulier des deuxième et troisième fréquences propres du pare-brise, sans alourdir le pare-brise, comme expliqué plus haut, le pare-brise feuilleté comprenant deux feuilles de verres et l'intercalaire incorporé entre les feuilles de verre.

L'intercalaire est destiné à être intégré dans un vitrage. Le vitrage est destiné à être utilisé dans un véhicule, en particulier en tant que pare-brise.

L'invention concerne également un vitrage comprenant un tel intercalaire. L'invention concerne également un véhicule comprenant un tel vitrage.

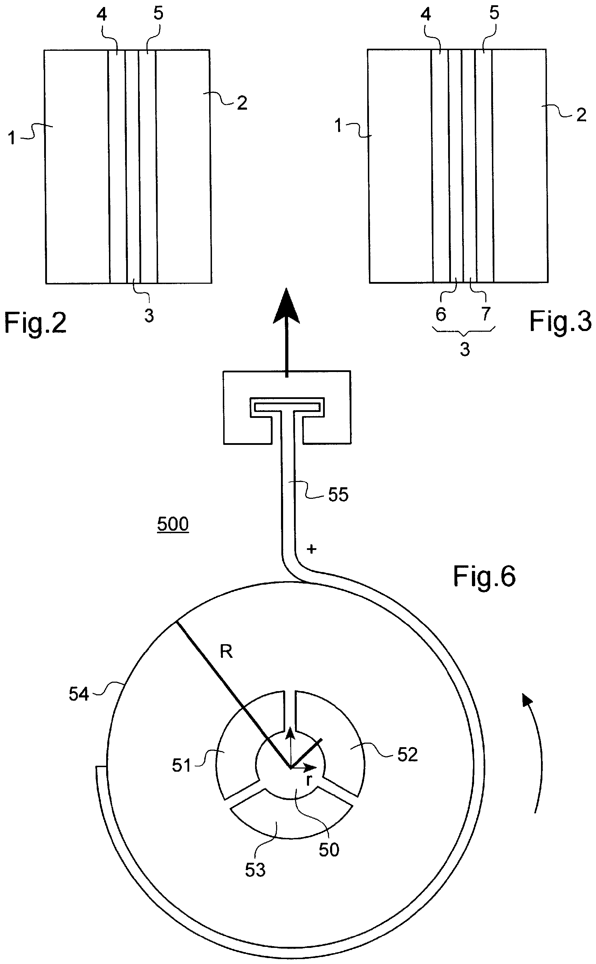

La figure 2 représente une vue en coupe d'un vitrage selon l'invention.

Le vitrage comprend deux feuilles de verre 1, 2 entre lesquelles est inséré l'intercalaire. La solidarisation de l'intercalaire aux feuilles de verre est réalisée par des moyens connus, par exemple par empilement des feuilles de verre et de l'intercalaire et par passage de l'ensemble en autoclave.

La feuille de verre 1 du vitrage est destinée à être tournée vers l'extérieur du véhicule tandis que la feuille de verre 2 est destinée à être tournée vers l'intérieur du véhicule. La feuille de verre 1 est plus épaisse que la feuille de verre 2 de façon à ce que le vitrage permette une meilleure protection contre les attaques extérieures (intempéries, projection de gravillons, etc...). En effet, plus le verre est épais, plus il est résistant mécaniquement. Toutefois, plus le verre est épais, plus il est lourd. Il faut donc trouver un compromis entre la résistance mécanique et le poids du vitrage. Ainsi, l'épaisseur de la feuille de verre 1 est par exemple comprise entre 1,4 mm et 2,1 mm et l'épaisseur de la feuille de verre 2 est par exemple comprise entre 1,1 mm et 2,1 mm.

Dans les vitrages existants, l'épaisseur de la feuille de verre 1 est en général de 2,1 mm et l'épaisseur de la feuille de verre 2 est en général de 1,6 mm.

De préférence, selon l'invention, l'épaisseur de la feuille de verre 1 est de 1,8 mm et l'épaisseur de la feuille de verre 2 est de 1,4 mm afin de limiter le poids du pare-brise, ce qui permet de le manipuler plus facilement et d'économiser de la matière. Cela permet également de réduire la consommation en carburant d'un véhicule équipé d'un tel pare-brise. Ces épaisseurs réduites des feuilles de verre sont possible sans perte des performances acoustiques ou mécaniques par rapport aux vitrages existants, comme on va le voir plus loin.

L'invention peut également s'appliquer à des pare-brise dont l'épaisseur de la feuille de verre 1 est de 1,6 mm et l'épaisseur de la feuille de verre 2 est de 1,2 mm, ou encore à des pare-brise dont l'épaisseur de la feuille de verre 1 est de 1,4 mm et l'épaisseur de la feuille de verre 2 est de 1,1 mm.

L'intercalaire est constitué de deux couches externes 4, 5 entre lesquelles est insérée une couche centrale 3.

Les couches externes 4, 5 ont un module de cisaillement G' supérieur ou égal à $3.10^7$ Pa à 20°C et pour une gamme de fréquences comprise entre 100 Hz et 240 Hz. De préférence, le module de cisaillement G' des couches externes est compris entre $10^8$ Pa et $2.10^8$ Pa pour encore améliorer l'amortissement vibro-acoustique de la couche centrale. Les couches externes sont par exemple en bu-tyral de polyvinyle (PVB).

La couche centrale 3 est choisie pour que son épaisseur h soit inférieure ou égale à 0,3 mm et que le paramètre de cisaillement g=G'/h de la couche centrale, G' étant le module de cisaillement, soit compris entre $8,00.10^8$ Pa/m et $2,67.10^9$ Pa/m à 20°C et pour une gamme de fréquences comprise entre 100 Hz et 240 Hz. La couche centrale 3 a ainsi des performances acoustiques optimisées pour les fréquences comprises entre 100 Hz à 240 Hz. La couche centrale 3 est par exemple en colle adhésive par pression appliquée à chaud (HotMelt PSA), par exemple en SikaMelt 9285 HT de la société Sika.

Afin de diminuer au maximum le poids du vitrage, il est préférable que l'épaisseur de la couche centrale 3 soit inférieure ou égale à 0,1 mm.

La couche centrale est alors choisie pour que h soit inférieure ou égale à 0,1 mm et que G'/h soit compris entre $1,33.10^9$ Pa/m et $2,00.10^9$ Pa/m à 20°C et pour une gamme de fréquences comprise entre 100 Hz et 240 Hz, ce qui permet d'optimiser encore plus l'amortissement vibro-acoustique.

Les propriétés acoustiques de la couche centrale 3 sont également définies par son facteur de perte tan $\delta$. La couche centrale 3 est choisi de telle sorte que son facteur de perte soit supérieur à 0,6 à 20°C et pour une gamme de fréquences comprise entre 100 Hz et 240 Hz, afin de permettre un amortissement satisfaisant.

Le module de cisaillement G' et le facteur de perte tan $\delta$ sont mesurés à l'aide d'un visco-analyseur.

Les feuilles de verre participent aux propriétés vibro-acoustiques d'un vitrage. Plus les feuilles de verre sont épaisses, plus l'excitation doit être importante pour faire vibrer le vitrage. Toutefois, l'optimisation des performances acoustiques de l'intercalaire pour des fréquences comprises entre 100 Hz et 240 Hz permet de diminuer l'épaisseur des feuilles de verre jusqu'à 1,8 mm, voire jusqu'à 1,6 mm ou même 1,4 mm, pour la feuille de verre destinée à être tournée vers l'extérieur du véhicule et jusqu'à 1,4 mm, voire jusqu'à 1,2 mm ou même 1,1 mm, pour la feuille de verre destinée à être tournée vers l'intérieur du véhicule, sans perte acoustique par rapport aux vitrages existants. Typiquement, les vitrages de pare-brise existants ont des feuilles de verre d'épaisseurs respectives 2,1 mm et 1,6 mm, entre lesquelles est inséré un intercalaire comprenant une couche de matériau plastique viscoélastique d'épaisseur 0,1 mm avec un module de cisaillement G' compris entre $10^6$ et $2.10^7$ Pa et un facteur de perte supérieur à 0,6 pour une température de 20°C et une fréquence de 50 Hz. La diminution de l'épaisseur des feuilles de verre permet une diminution du poids du vitrage, donc une maniabilité améliorée, ainsi qu'une diminution de matière, et une réduction de la consommation en carburant d'un véhicule équipé d'un tel pare-brise.

Les deux couches externes 4, 5 ont la même épaisseur e. L'épaisseur de chaque couche externe 4, 5 est déterminée à la fois de façon à ce que l'épaisseur totale (2e + h) de l'intercalaire soit au maximum de 0,86 mm, c'est-à-dire l'épaisseur des intercalaires dans les pare-brise acoustiques existants, et de façon à ce que les propriétés mécaniques des couches externes soient suffisantes pour satisfaire aux normes de résistance mécaniques définies pour l'automobile, en particulier le règlement No. 43 des Nations Unies (dit règlement R43), de résistance à des chocs durs. Le règlement R43 des Nations Unies concerne l'adoption de prescriptions techniques uniformes relatives à l'homologation de vitrages de sécurité et de l'installation de ces vitrages sur des véhicules à roues. Il est en effet souhaitable que l'épaisseur totale de l'intercalaire soit la plus faible possible pour des raisons de poids du pare-brise d'une part, ce qui permet de réduire la consommation en carburant d'un véhicule équipé d'un tel pare-brise, et d'économie de matière d'autre part.

Pour ce faire, l'épaisseur e est minimisée en tenant compte à la fois de l'adhésion d'un intercalaire constitué du matériau des couches externes vis-à-vis de deux feuilles de verre et de la résistance à la déchirure du matériau des couches externes.

On évalue l'adhésion sur la base de la méthode de test et de calcul décrite dans la demande de brevet EP-A-1 495 305, qui est reprise ci-après.

Tout d'abord, on exerce un effort de torsion sur un échantillon de vitrage feuilleté composé de deux feuilles de verre et d'un intercalaire constitué du matériau des couches externes, jusqu'à l'amorce du décollement de l'intercalaire constitué du matériau des couches externes par rapport à au moins l'une des feuilles de verre. En pratique, le test est réalisé sur un échantillon rond 50 de vitrage, de rayon r égal à 10 mm, par exemple au moyen d'un dispositif de torsion de type connu 500 illustré sur la figure 6.

Le dispositif 500 comporte trois mors 51, 52, 53, une poulie 54 de rayon R égal à 100 mm et reliée à une chaîne d'entraînement 55 d'axe vertical. Les mors sont en forme d'arcs de cercle de 120° chacun, de manière à enserrer la totalité de l'échantillon. Le revêtement superficiel des mors est dans un matériau compatible mécaniquement avec le verre, par exemple en aluminium, en Téflon®, ou en polyéthylène.

L'un des mors est maintenu fixe contre un bâti, tandis qu'un autre mors est fixé sur la poulie 54 qui est destinée à tourner pour exercer une torsion sur l'échantillon. La rotation de la poulie 54 est engendrée par le déplacement de la chaîne 55 reliée à la poulie. La chaîne est tractée à vitesse constante de 35 à 50 mm/min au minimum.

On mesure à l'aide d'un capteur de force la force F nécessaire à l'apparition d'un début de décollement de l'intercalaire constitué du matériau des couches externes lors de la torsion de l'échantillon. On peut alors en déduire par calcul la contrainte de cisaillement d'adhésion, par la formule connue : $\tau = \dfrac{2FR}{\pi r^3}$ , où F est la force nécessaire à l'apparition d'un début de décollement de l'intercalaire constitué du matériau des couches externes, R est le rayon de la poulie 54 et r est le rayon de l'échantillon.

Comme expliqué dans la demande EP-A-1 495 305, le dispositif 500 est toutefois volumineux, ce qui impose que les tests doivent se faire en laboratoire. Le dispositif 500 n'est donc pas adapté pour des mesures de type "indicateurs procédé" sur une ligne de fabrication de vitrages feuilletés. Or, pour la fabrication de vitrage feuilletés, bien que la composition de l'intercalaire polymérique soit élaborée pour répondre aux valeurs de contraintes fixées par l'invention, une mauvaise adhésion de l'intercalaire peut néanmoins apparaître dans le produit fini en raison de paramètres liés au procédé de fabrication du vitrage, tels que les conditions de stockage de l'intercalaire, la qualité de lavage du verre, ou encore la température et les efforts de pression au cours de l'étape de calandrage lors de l'assemblage du verre et de l'intercalaire, qui influencent la qualité du collage.

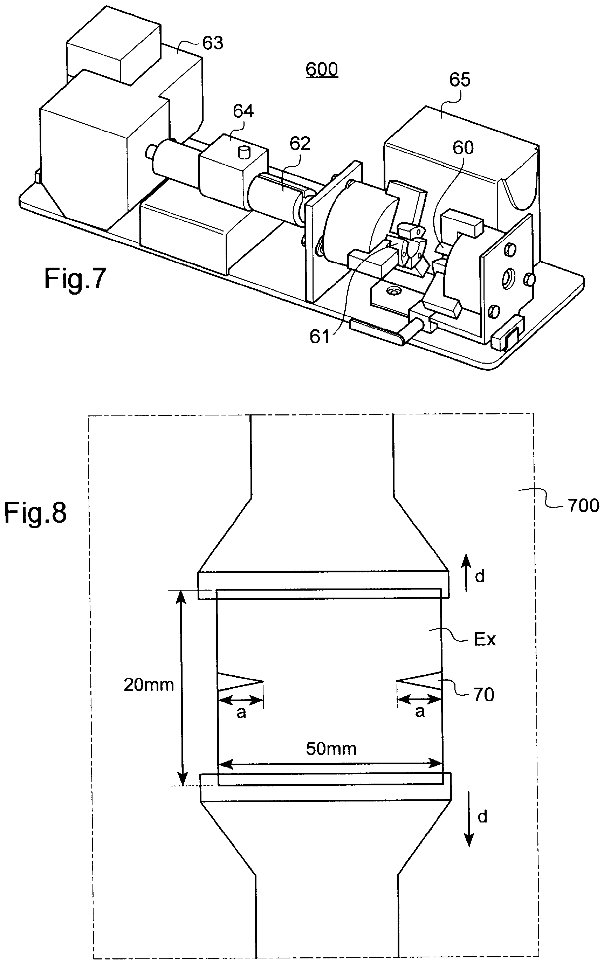

Afin de réaliser des mesures pendant le suivi de fabrication à proximité de la ligne de fabrication, et ainsi d'intervenir rapidement sur le procédé en réponse à des mauvaises valeurs de contraintes mesurées, il est possible en variante d'utiliser un autre dispositif de mesure 600 qui, avantageusement, est de faible encombrement et facilement transportable. Ce dispositif 600, représenté sur la figure 7, est miniaturisé à environ 60 cm par 20 cm et comporte deux systèmes à trois mors 60 et 61, un arbre de rotation 62, un moteur 63 pour la rotation de l'arbre, un appareil de mesure de couple 64 et un coffret 65 logeant les éléments de calcul.

L'échantillon rond du vitrage feuilleté, composé de deux feuilles de verre et d'un intercalaire constitué du matériau des couches externes, est destiné à être pris en sandwich entre les deux systèmes à mors 60 et 61, l'un des systèmes 60 étant fixe tandis que l'autre est apte à être mobile et mis en rotation grâce à sa connexion à l'arbre 62. L'appareil de mesure de couple est disposé entre le moteur et le système à mors mobile 61. La vitesse de rotation de l'arbre dépend de l'épaisseur d'intercalaire. A titre d'exemple, pour un intercalaire constitué du matériau des couches externes d'épaisseur 0,76 mm, la rotation est de l'ordre de 0,08 tour/min.

Le système 61 tourne et lorsque le moment du couple mesuré s'inverse, l'amorce du décollement de l'intercalaire constitué du matériau des couches externes a eu lieu. L'appareil de mesure est relié aux éléments de calcul du coffret 65, qui comporte une partie affichage sur laquelle est directement lisible la valeur de la contrainte d'adhésion τ.

Quel que soit le dispositif utilisé, en vue d'apprécier finement les dispersions de la valeur de la contrainte d'adhésion τ, on préfère répéter le test sur plusieurs échantillons, par exemple au nombre minimal de cinq, et calculer une moyenne de la contrainte τ associée à son écart-type.

On contrôle que la valeur de la contrainte d'adhésion τ obtenue est dans une plage de valeurs admissibles pour qu'un vitrage feuilleté quelconque résiste aux efforts correspondant au règlement R43 (résistance aux chocs durs). Cette plage de valeurs admissibles est déterminée de manière expérimentale, à partir d'essais normalisés de résistance mécanique définis dans le règlement R43, qui sont réalisés sur des vitrages feuilletés de compositions différentes.

La plage de valeurs admissibles pour le règlement R43, à l'intérieur de laquelle toute valeur de la contrainte d'adhésion τ convient pour satisfaire au critère d'adhésion, est l'ensemble des valeurs inférieures à 5 MPa. De préférence, la plage de valeurs admissibles de la contrainte d'adhésion τ pour le règlement R43 est comprise entre 2 MPa et 5 MPa, la borne inférieure de cette plage de valeurs étant déterminée pour assurer une bonne transparence du vitrage, indépendamment des considérations de résistance mécanique du vitrage.

Une fois que l'on a vérifié que la contrainte d'adhésion τ de l'intercalaire constitué du matériau des couches externes est située dans la plage précitée de valeurs admissibles, on procède au dimensionnement proprement dit des couches externes de l'intercalaire.

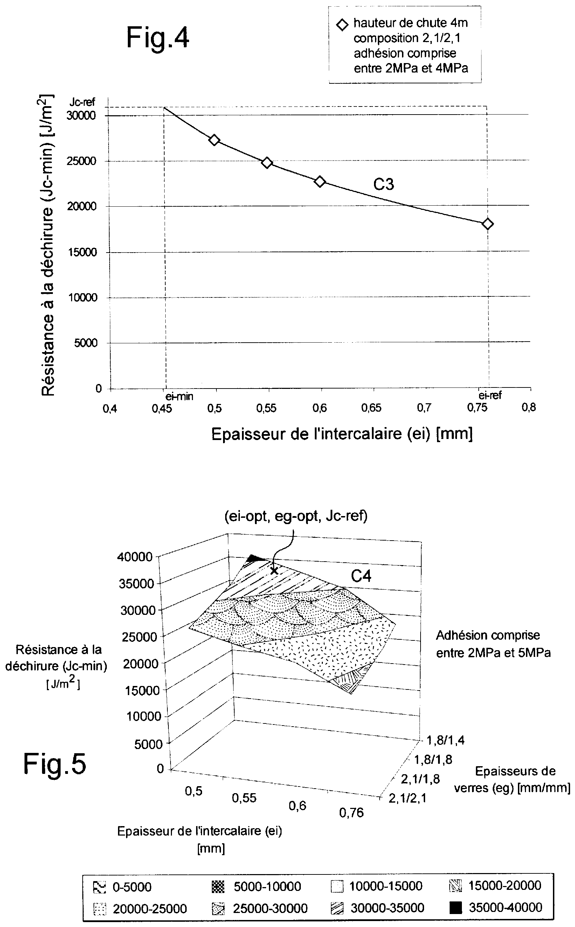

Les graphiques des figures 4 et 5 illustrent deux approches possibles pour le dimensionnement de ces couches externes de sorte qu'elles satisfassent aux exigences du règlement R43 de résistance aux chocs durs.

Selon une première approche, qui correspond à la figure 4, on dimensionne un vitrage avec une épaisseur totale $e_{g\text{-}dim}$ de feuilles de verre dans le vitrage feuilleté, fixée et égale à 4,2 mm, ce qui correspond par exemple à une épaisseur de chaque feuille de verre de 2,1 mm, et un intercalaire constitué du matériau des couches externes, de composition chimique spécifique $C_i$, par exemple un intercalaire à base de PVB. La couche centrale est ignorée pour la détermination de l'épaisseur des couches externes.

Dans ce cas, en vue de dimensionner l'intercalaire constitué du matériau des couches externes, on trace tout d'abord une courbe $C_3$, visible sur la figure 4, représentative de la résistance à la déchirure d'intercalaire minimale $J_{c\text{-}min}$ requise pour qu'un vitrage feuilleté quelconque, comportant au moins un substrat en verre et un intercalaire de même composition chimique $C_i$ que les couches externes 4, 5 du vitrage à fabriquer, résiste aux efforts correspondant au règlement R43, en fonction de l'épaisseur d'intercalaire $e_i$ du vitrage feuilleté quelconque, cette courbe étant établie pour une épaisseur de feuille de verre $e_g$ égale à 4,2 mm. En pratique, la courbe $C_3$ est obtenue à partir d'essais normalisés de résistance mécanique définis dans le règlement R43, réalisés sur des vitrages feuilletés qui comportent chacun au moins un substrat en verre et un intercalaire de composition chimique $C_i$ et qui diffèrent les uns des autres par leur composition en termes d'épaisseur de leur intercalaire.

On identifie ensuite un vitrage feuilleté de référence, qui résiste aux efforts correspondant au règlement R43, avec une épaisseur de substrat en verre égale à 4,2 mm, et qui comporte un intercalaire ayant la composition chimique spécifique $C_i$. Un exemple d'un tel vitrage feuilleté de référence est le vitrage connu 2,1/0,76/2,1, qui comporte deux substrats en verre d'épaisseur 2,1 mm chacun et deux couches d'intercalaire d'épaisseur standard 0,38 mm ayant la composition $C_i$, ce qui correspond à une épaisseur d'intercalaire $e_{i\text{-}ref}$ du vitrage feuilleté de référence égale à 0,76 mm. La résistance de ce vitrage de référence aux efforts correspondant au règlement R43 est vérifiée par un essai normalisé de résistance mécanique, dans cet exemple avec une hauteur de chute d'impacteur de 4 m.

On détermine alors la résistance à la déchirure $J_{c\text{-}ref}$ de l'intercalaire du vitrage de référence 2,1/0,76/2,1, par la méthode de Tielking.

Cette méthode, développée par M. Tielking, consiste à évaluer la résistance à la déchirure d'un matériau sur la base d'une méthode de calcul de l'énergie de fond de fissure J. La méthode de Tielking est explicitée en particulier dans les demandes de brevet EP-A-1 151 855 et EP-A-1 495 305, et reprise en partie ci-dessous.

La résistance à la déchirure d'un intercalaire est une caractéristique intrinsèque au matériau le constituant. Elle est caractérisée par une valeur énergétique représentative de l'énergie nécessaire à la propagation d'une fissure initialisée dans le matériau. Cette énergie, appelée énergie critique $J_c$, est différente pour chaque type de matériau et est indépendante de l'épaisseur du film d'intercalaire.

La résistance à la déchirure ou énergie critique $J_c$ est donnée de manière connue par une méthode énergétique fondée sur l'intégrale de Rice J, qui définit l'énergie localisée en fond de fissure d'un film subissant des contraintes très intenses à l'endroit d'une fissuration. Elle s'écrit sous la forme mathématique simplifiée:

$$J = -\frac{1}{e_1}\left(\frac{\partial U}{\partial a}\right),$$ pour un étirement donné d de l'échantillon testé qui sera nommé par la suite déplacement d, et où

    $e_1$ est l'épaisseur de l'échantillon
    a, la taille de la fissure,
    U, l'énergie potentielle de l'échantillon.

Le dispositif expérimental pour la détermination de la résistance à la déchirure est illustré sur la figure 8. Des essais de traction au moyen d'une machine de traction-compression 700 sont réalisés sur plusieurs échantillons $Ex_n$, par exemple au nombre de quatre, d'un même matériau et de surface égale à 100 mm$^2$ (50 mm de longueur par 20 mm de largeur). Chaque échantillon est entaillé sur ses côtés et perpendiculairement à la force de traction, d'une longueur de fissuration a distincte pour chaque échantillon $Ex_n$, et correspondant respectivement à 5, 8, 12 et 15 mm.

Chaque échantillon $Ex_n$ est étiré perpendiculairement aux fissurations 20 à une vitesse d'étirement de 100 mm/min et sur une longueur d'étirement ou distance d donnée, et dans un environnement où la température est de 20°C.

Selon la méthode décrite en détail dans EP-A-1 495 305, il est possible d'établir une courbe d'évolution de l'énergie J de fond de fissure en fonction de l'étirement d subi par l'échantillon (non représentée). A l'aide d'une caméra vidéo qui visualise la propagation de la fissure 70, on détecte ensuite pour quel déplacement $d_c$ la propagation de la fissure de l'échantillon commence. Puis, à partir de la courbe J(d), on déduit la valeur de l'énergie critique $J_c$ d'initialisation de la déchirure de l'échantillon, correspondant au déplacement $d_c$. C'est à cette valeur critique $J_c$ que le matériau se déchire et qu'il est par conséquent mécaniquement endommagé au regard de la fonction mécanique requise.

La valeur de la résistance à la déchirure $J_{c\text{-}ref}$ mesurée pour l'intercalaire de composition $C_i$ du vitrage de référence 2,1/0,76/2,1 est de 31000 J/m$^2$.

A l'aide de la courbe $C_3$ de la figure 4, on déduit ensuite l'épaisseur d'intercalaire minimale requise $e_{i\text{-}min}$ correspondant à une valeur de résistance à la déchirure d'intercalaire minimale requise $J_{c\text{-}min}$ égale à la résistance à la déchirure de l'intercalaire du vitrage feuilleté de référence $J_{c\text{-}ref}$. Comme montré sur la courbe $C_3$, l'épaisseur d'intercalaire minimale requise $e_{i\text{-}min}$ est égale à 0,45 mm.

Ainsi, on peut dimensionner le vitrage feuilleté constitué de deux feuilles de verre d'épaisseur 2,1 mm chacune et d'un intercalaire constitué du matériau des couches externes avec une épaisseur $e_{i\text{-}dim}$ de l'intercalaire supérieure ou égale à l'épaisseur d'intercalaire minimale requise $e_{i\text{-}min}$ = 0,45 mm. De préférence, l'épaisseur d'intercalaire $e_{i\text{-}dim}$ du vitrage feuilleté n'est supérieure à la valeur d'épaisseur d'intercalaire minimale requise $e_{i\text{-}min}$ que dans une limite de 20% au-dessus de cette valeur, c'est-à-dire, dans l'exemple précédent, $e_{i\text{-}dim}$ est de préférence telle que 0,45 mm $\leq e_{i\text{-}dim} \leq$ 0,55 mm.

On obtient ainsi un vitrage feuilleté satisfaisant aux exigences du règlement R43, qui comporte deux feuilles de verre 1, 2 d'épaisseur 2,1 mm et un intercalaire avec une couche centrale 3 et deux couches externes 4, 5, chacune des couches externes ayant une épaisseur comprise entre 0,225 mm et 0,275 mm.

On peut tracer la courbe $C_3$ pour d'autres valeurs de feuilles de verre, par exemple 1,8 mm et 1,4 mm. Chacune des couches externes a alors une épaisseur comprise entre 0,2 mm et 0,37 mm.

Selon une deuxième approche possible de dimensionnement des couches externes de l'intercalaire, qui correspond à la figure 5, on dimensionne un vitrage feuilleté sans fixer arbitrairement l'épaisseur des feuilles de verre, le vitrage comprenant un intercalaire constitué du matériau des couches externes.

On trace un graphique $C_4$ en trois dimensions, visible sur la figure 5, représentatif de la résistance à la déchirure d'intercalaire minimale $J_{c\text{-min}}$ requise pour qu'un vitrage feuilleté quelconque, comportant au moins un substrat en verre et un intercalaire de même composition chimique $C_i$ que les couches externes 4, 5 du vitrage feuilleté à fabriquer, résiste aux efforts correspondant au règlement R43, en fonction à la fois de l'épaisseur d'intercalaire constitué du matériau des couches externes $e_i$ du vitrage feuilleté quelconque et de l'épaisseur de feuilles de verre $e_g$ du vitrage feuilleté quelconque. Le graphique $C_4$ de la figure 5 est obtenu à partir d'essais normalisés de résistance mécanique définis dans le règlement R43, réalisés sur des vitrages feuilletés qui comportent chacun au moins un substrat en verre et un intercalaire de composition chimique $C_i$ et qui diffèrent les uns des autres par leur composition en termes d'épaisseur d'intercalaire et d'épaisseur de substrat.

On détermine ensuite la résistance à la déchirure $J_{c\text{-ref}}$ d'un vitrage feuilleté de référence, qui résiste aux efforts correspondant au règlement R43 et qui comporte un intercalaire ayant la composition chimique spécifique $C_i$.

Le vitrage feuilleté connu 2,1/0,76/2,1 décrit ci-dessus peut par exemple servir de vitrage feuilleté de référence, de même que le vitrage feuilleté 2,1/0,76/1,8, également connu, qui comporte deux feuilles de verre d'épaisseurs respectives 2,1 mm et 1,8 mm et deux couches d'intercalaire constitué du matériau des couches externes d'épaisseur standard 0,38 mm ayant la composition chimique $C_i$, ce qui correspond à une épaisseur d'intercalaire $e_{i\text{-ref}}$ égale à 0,76 mm. La résistance à la déchirure $J_{c\text{-ref}}$ de l'un ou l'autre vitrage de référence aux efforts correspondant au règlement R43 est évaluée comme précédemment par la méthode de Tielking.

A l'aide du graphique $C_4$, on déduit ensuite une combinaison de valeurs optimales $e_{i\text{-opt}}$, $e_{g\text{-opt}}$ de l'épaisseur d'intercalaire constitué du matériau des couches externes et de l'épaisseur de feuilles de verre qui correspond à une valeur de résistance à la déchirure d'intercalaire minimale requise $J_{c\text{-min}}$ égale à la résistance à la déchirure de l'intercalaire du vitrage feuilleté de référence $J_{c\text{-ref}}$. Par exemple, si l'on part du vitrage de référence 2,1/0,76/2,1, qui correspond à une valeur de la résistance à la déchirure $J_{c\text{-ref}}$ de 31000 J/m$^2$, les points qui fournissent une combinaison de valeurs optimales $e_{i\text{-opt}}$, $e_{g\text{-opt}}$ sont les points de la surface, ou nappe, du graphique $C_4$ qui correspondent à une valeur de $J_{c\text{-min}}$ de 31000 J/m$^2$. A ce sujet, on note que chacune des valeurs optimales $e_{i\text{-opt}}$ ou $e_{g\text{-opt}}$ n'est pas forcément, de manière individuelle, une valeur minimale de l'épaisseur d'intercalaire constitué du matériau des couches externes ou une valeur minimale de l'épaisseur de feuilles de verre. C'est la combinaison des valeurs $e_{i\text{-opt}}$ et $e_{g\text{-opt}}$ qui conduit à une valeur minimisée de l'épaisseur globale du vitrage feuilleté.

Comme visible sur le graphique $C_4$, la combinaison de valeurs $e_i = 0,5$ mm et $e_g = 1,8$ mm/1,4 mm est une combinaison de valeurs supérieures ou égales à une combinaison de valeurs optimales.

Dès lors, on peut dimensionner le vitrage feuilleté avec une épaisseur $e_{i\text{-dim}}$ de l'intercalaire constitué du matériau des couches externes supérieure ou égale à 0,5 mm et des épaisseurs $e_{g\text{-dim}}$ des feuilles de verre de 1,8 mm et 1,4 mm, respectivement, ce vitrage feuilleté satisfaisant aux exigences du règlement R43.

L'intercalaire de composition $C_i$ considéré dans les exemples ci-dessus présente des performances moyennes sur le plan de sa résistance à la déchirure et les niveaux de résistance à la déchirure des compositions d'intercalaires les plus performantes connues à l'heure actuelle permettent d'envisager des combinaisons de valeurs optimales $e_{i\text{-opt}}$, $e_{g\text{-opt}}$ encore réduites par rapport aux valeurs données précédemment.

En particulier, pour un vitrage feuilleté adapté pour résister aux efforts correspondant au règlement R43 et comportant deux substrats en verre d'épaisseurs respectives 1,8 mm et 1,4 mm, l'épaisseur d'intercalaire minimale requise $e_{i\text{-min}}$ peut descendre jusqu'à environ 0,4 mm. Dès lors, l'épaisseur d'intercalaire $e_{i\text{-dim}}$ optimisée d'un vitrage feuilleté répondant aux exigences du règlement R43 et comportant deux substrats en verre d'épaisseurs respectives 1,8 mm et 1,4 mm est, de manière générale, telle que $0,4$ mm $\leq e_{i\text{-dim}} \leq 0,74$ mm, la borne inférieure de cet intervalle correspondant aux compositions d'intercalaires présentant des performances élevées sur le plan de leur résistance à la déchirure.

On obtient ainsi un vitrage feuilleté satisfaisant aux exigences du règlement R43, qui comporte deux feuilles de verre 1, 2 d'épaisseurs respectives 1,8 mm et 1,4 mm et un intercalaire avec une couche centrale 3 et deux couches externes 4, 5, chacune des couches externes ayant une épaisseur comprise entre 0,2 mm et 0,37 mm.

Ainsi, on fixe l'épaisseur e de chaque couche externe 4, 5 afin qu'elles fournissent des propriétés mécaniques suffisantes au vitrage, à savoir des propriétés mécaniques qui satisfont au règlement R43. On procède de la façon suivante :

- on vérifie que l'adhésion du matériau des couches externes est compatible avec les exigences du règlement R43 en réalisant une torsion d'un échantillon d'intercalaire constitué du matériau des couches externes solidaire de deux feuilles de verre, en mesurant la force de torsion (F) pour laquelle la dissociation de l'intercalaire constitué du matériau des couches externes avec les feuilles de verre est amorcée, et en calculant à partir de cette force (F) la contrainte de cisaillement d'adhésion ($\tau$) correspondante, et on compare cette valeur de la contrainte d'adhésion ($\tau$) à une plage de valeurs admissibles pour qu'un vitrage feuilleté quelconque résiste aux efforts correspondants au règlement R43 ; et

- on fixe l'épaisseur e de chacune des couches externes afin qu'elles satisfassent aux exigences du règlement R43 de la façon suivante :

  - on identifie un vitrage feuilleté de référence, qui résiste aux efforts correspondant au règlement R43 et qui comporte deux feuilles de verre et un intercalaire constitué du matériau des couches externes ;
  - on détermine la résistance à la déchirure ($J_{c\text{-}ref}$) de l'intercalaire du vitrage feuilleté de référence, l'épaisseur d'intercalaire ($e_{i\text{-}ref}$) du vitrage feuilleté de référence et l'épaisseur de feuilles de verre ($e_{g\text{-}ref}$) du vitrage feuilleté de référence ;
  - à l'aide d'un graphique ($C_3$) représentatif de la résistance à la déchirure d'intercalaire minimale ($J_{c\text{-}min}$) requise pour qu'un vitrage feuilleté quelconque résiste aux efforts correspondants au règlement R43, en fonction de l'épaisseur d'intercalaire ($e_i$) du vitrage feuilleté quelconque, ce graphique étant établi pour une épaisseur de substrat du vitrage feuilleté quelconque égale à l'épaisseur de substrat dans le vitrage feuilleté de référence ($e_g = e_{g\text{-}ref}$), on déduit l'épaisseur d'intercalaire minimale requise ($e_{i\text{-}min}$) qui correspond à une valeur de résistance à la déchirure d'intercalaire minimale requise égale à la résistance à la déchirure de l'intercalaire du vitrage feuilleté de référence ($J_{c\text{-}min} = J_{c\text{-}ref}$) ;
  - on fixe l'épaisseur e de chaque couche externe telle que e soit supérieure ou égale à ladite valeur optimale d'épaisseur d'intercalaire ($e_{i\text{-}opt}$).

En variante, on fixe à la fois l'épaisseur e de chaque couche externe 4, 5 et l'épaisseur des feuilles de verre afin que l'ensemble fournisse des propriétés mécaniques suffisantes au vitrage, à savoir des propriétés mécaniques qui satisfont au règlement R43. On procède de la façon suivante :

- on vérifie que l'adhésion du matériau des couches externes est compatible avec les exigences du règlement R43 en réalisant une torsion d'un échantillon d'intercalaire constitué du matériau des couches externes solidaire de deux feuilles de verre, en mesurant la force de torsion (F) pour laquelle la dissociation de l'intercalaire constitué du matériau des couches externes avec les feuilles de verre est amorcée, et en calculant à partir de cette force (F) la contrainte de cisaillement d'adhésion ($\tau$) correspondante, et on compare cette valeur de la contrainte d'adhésion ($\tau$) à une plage de valeurs admissibles pour qu'un vitrage feuilleté quelconque résiste aux efforts correspondants au règlement R43 ; et

- on fixe l'épaisseur e de chacune des couches externes et l'épaisseur totale des feuilles de verre afin qu'elles satisfassent aux exigences du règlement R43 de la façon suivante :

  - on identifie un vitrage feuilleté de référence, qui résiste aux efforts correspondant au règlement R43 et qui comporte deux feuilles de verre et un intercalaire constitué du matériau des couches externes ;
  - on détermine la résistance à la déchirure ($J_{c\text{-}ref}$) de l'intercalaire du vitrage feuilleté de référence, l'épaisseur d'intercalaire ($2e_{\text{-}ref}$) du vitrage feuilleté de référence et l'épaisseur de feuilles de verre ($e_{g\text{-}ref}$) du vitrage feuilleté de référence ;
  - à l'aide d'un graphique ($C_4$) représentatif de la résistance à la déchirure d'intercalaire minimale ($J_{c\text{-}min}$) requise pour qu'un vitrage feuilleté quelconque résiste aux efforts correspondants au règlement R43, en fonction de l'épaisseur d'intercalaire ($e_i$) du vitrage feuilleté quelconque et de l'épaisseur de feuilles de verre ($e_g$) du vitrage feuilleté quelconque, on déduit une combinaison de valeurs optimales ($e_{i\text{-}opt}$, $e_{g\text{-}opt}$) de l'épaisseur d'intercalaire et de l'épaisseur de feuilles de verre qui correspond à une valeur de résistance à la déchirure d'intercalaire minimale requise égale à la résistance à la déchirure de l'intercalaire du vitrage feuilleté de référence ($J_{c\text{-}min} = J_{c\text{-}ref}$) ;
  - on fixe l'épaisseur e de chaque couche externe telle que e soit supérieure ou égale à ladite valeur optimale d'épaisseur d'intercalaire ($e_{i\text{-}opt}$) et on fixe l'épaisseur des feuilles de verre ($e_{g\text{-}dim}$) supérieure ou égale à ladite valeur optimale d'épaisseur de feuilles de verre ($e_{g\text{-}opt}$).

L'épaisseur totale de l'intercalaire est de préférence inférieure ou égale à 0,86 mm.

La figure 3 représente une vue en coupe d'un vitrage selon l'invention selon un autre mode de réalisation.

Les feuilles de verre 1, 2 et les couches externes 4, 5 de l'intercalaire sont identiques par rapport à celles de la figure 2.

La couche centrale 3 comprend deux films 6, 7 amortissants. Le film amortissant 6 est constitué d'un matériau plastique viscoélastique A, qui est différent du matériau viscoélastique B dont est constitué le film amortissant 7. Selon un mode de réalisation, les matériaux A, B sont coextrudés. En variante, ils sont feuilletés.

Les films amortissants 6, 7 constituant la couche centrale 3 permettent d'optimiser l'amortissement des vibrations acoustiques sur des gammes de températures distinctes. Ainsi, le film 6 amortit de façon optimale les vibrations acoustiques sur une première gamme de températures et le film 7 amortit de façon optimale les vibrations acoustiques sur une deuxième gamme de températures. Les première et deuxième gammes de température ne se chevauchent pas. Cela permet d'optimiser l'amortissement des fréquences comprises entre 100 Hz et 240 Hz sur une plus large gamme de températures.

Pour ce faire, le matériau A est choisi pour présenter sur une gamme de températures $t_A$ et pour une fréquence comprise entre 100 Hz et 240 Hz, un facteur de perte supérieur à 0,6 et un paramètre de cisaillement compris entre $8.10^8$ Pa/m et $2,67.10^9$ Pa/m. De même, le matériau B est choisi pour présenter sur une gamme de températures $t_B$ et pour une fréquence comprise entre 100 Hz et 240 Hz, un facteur de perte supérieur à 0,6 et un paramètre de cisaillement compris entre $8.10^8$ Pa/m et $2,67.10^9$ Pa/m.

De plus, le film 6 ou 7 qui présente le facteur de perte le plus élevé, pour une plage donnée de températures incluse dans la gamme de températures respectivement $t_A$ ou $t_B$, présente un paramètre de cisaillement équivalent $g_{AouB\,eq} = h.g_{AouB}$, $g_{AouB}$ étant le paramètre de cisaillement du matériau respectivement A ou B constituant respectivement le film 6 ou 7 et h étant l'épaisseur de la couche centrale, qui est très inférieur au paramètre de cisaillement équivalent de l'autre film 7 ou 6 respectivement pour ladite plage donnée de température.

La plage donnée de température est la première gamme de températures ou la deuxième gamme de températures dans laquelle le film 6 ou 7 respectivement amortit de façon optimale les vibrations acoustiques aux fréquences comprises entre 100 Hz et 240 Hz.

Ainsi, il ne faut pas seulement que le facteur de perte de chacun des films 6, 7 soit supérieur à 0,6 et que le paramètre de cisaillement du matériau de chacun des films soit entre $8.10^8$ Pa/m et $2,67.10^9$ Pa/m dans sa plage correspondante de températures, mais il faut que le film le plus amorti (tan $\delta$ le plus élevé) dans la plage correspondante de températures ait un module de cisaillement équivalent beaucoup plus faible que l'autre film. De cette manière, l'intercalaire présentera un comportement similaire au film le plus amorti sur chaque plage de températures. L'intercalaire assurera ainsi un amortissement optimum sur chacune des plages de températures pour lesquelles chacun des films constituant l'intercalaire joue un rôle amortissant optimal.

Nous allons maintenant apporter la preuve que l'amortissement des fréquences comprises entre 100 Hz et 240 Hz est bien optimal pour les plages de g décrites plus haut.

La figure 1 représente une courbe de l'amortissement modal d'un pare-brise feuilleté en fonction du paramètre de cisaillement d'une couche centrale de l'intercalaire du pare-brise feuilleté pour des fréquences comprises entre 100 Hz et 240 Hz à 20°C. Cette courbe a été calculée par une méthode dite des éléments finis.

Le calcul a été réalisé pour un pare-brise constitué de deux feuilles de verre d'épaisseurs respectives 1,4 mm et 1,8 mm entre lesquelles est incorporé un intercalaire en matériau plastique viscoélastique. L'intercalaire comprend trois couches : une couche centrale incorporée entre deux couches externes, l'épaisseur totale de l'intercalaire étant fixée à 0,76 mm. La courbe de la figure 1 est tracée pour différentes épaisseurs de la couche centrale comprises entre 0,05 mm et 0,3 mm.

Comme le montre la figure 1, la plage 20 de paramètre de cisaillement g comprise entre $8,00.10^8$ Pa/m et $2,67.10^9$ Pa/m pour une couche centrale 3 d'épaisseur h inférieure ou égale à 0,3 mm, à 20°C et pour une gamme de fréquences comprise entre 100 Hz et 240 Hz, permet un amortissement modal supérieur ou égal à 0,34, donc très bon puisque le maximum de la courbe est à 0,37 pour une épaisseur de couche centrale de 0,3 mm.

La plage 10 de paramètre de cisaillement g comprise entre $1,33.10^9$ Pa/m et $2,00.10^9$ Pa/m pour une couche centrale 3 d'épaisseur h inférieure ou égale à 0,1 mm, à 20°C et pour une gamme de fréquences comprise entre 100 Hz et 240 Hz, permet un amortissement modal supérieur ou égal à 0,34, donc un amortissement optimisé. En effet, la courbe d'amortissement modal culmine à 0,345 pour une épaisseur de couche centrale de 0,1 mm et à 0,34 pour une épaisseur de couche centrale de 0,05 mm.

L'invention permet donc bien d'optimiser l'amortissement vibro-acoustique des premières fréquences propres d'un pare-brise comprenant l'intercalaire tel que décrit plus haut.

L'intercalaire selon l'invention permet également un bon amortissement vibro-acoustique en dehors de la plage de fréquence pour laquelle il est optimisé.

**Revendications**

1. Procédé de sélection d'un intercalaire plastique viscoélastique comprenant deux couches externes (4, 5) et une couche centrale (3) et destiné à être incorporé entre deux feuilles de verre (1, 2) d'un vitrage, le procédé comprenant les étapes suivantes :

    - on fournit un premier élément en matériau plastique viscoélastique destiné à constituer la couche centrale (3) et un deuxième élément en matériau plastique viscoélastique destiné à constituer les couches externes (4, 5),
    - on mesure le module de cisaillement G' du premier élément et du deuxième élément grâce à un visco-analyseur,
    - on sélectionne le matériau du deuxième élément uniquement si son module de cisaillement G' est supérieur ou égal à $3.10^7$ Pa à 20°C et pour une gamme de fréquences comprise entre 100 Hz et 240 Hz,
    - on fixe l'épaisseur h du premier élément telle que h est inférieure ou égale à 0,3 mm et que le paramètre de cisaillement g=G'/h, G' étant le module de cisaillement, est compris entre $8.10^8$ Pa/m et $2,67.10^9$ Pa/m à 20°C et pour une gamme de fréquences comprise entre 100 Hz et 240 Hz.

2. Procédé selon la revendication 1, dans lequel on fixe l'épaisseur h du premier élément telle que h est inférieure ou égale à 0,1 mm et que G'/h est compris entre $1,33.10^9$ Pa/m et $2.10^9$ Pa/m à 20°C et pour une gamme de fréquences comprise entre 100 Hz et 240 Hz.

3. Procédé selon la revendication 1 ou 2, comprenant en outre, avant l'étape de fixation de l'épaisseur h, les étapes suivantes :

   - on mesure le facteur de perte tan $\delta$ du premier élément grâce au visco-analyseur,
   - on sélectionne le premier élément uniquement si son facteur de perte tan $\delta$ est supérieur à 0,6.

4. Procédé selon l'une des revendications 1 à 3, comprenant en outre en outre l'étape suivante :

   - on sélectionne le matériau du deuxième élément uniquement si son module de cisaillement G' est compris entre $10^8$ Pa et $2.10^8$ Pa à 20°C et pour une gamme de fréquences comprise entre 100 Hz et 240 Hz.

5. Procédé selon la revendication 4, comprenant en outre les étapes suivantes :

   - on vérifie que l'adhésion du matériau du deuxième élément est compatible avec les exigences du règlement R43 en réalisant une torsion d'un échantillon d'intercalaire constitué du matériau du deuxième élément solidaire de deux feuilles de verre, en mesurant la force de torsion (F) pour laquelle la dissociation de l'intercalaire constitué du matériau du deuxième élément avec les feuilles de verre est amorcée, et en calculant à partir de cette force (F) la contrainte de cisaillement d'adhésion ($\tau$) correspondante, et on compare cette valeur de la contrainte d'adhésion ($\tau$) à une plage de valeurs admissibles pour qu'un vitrage feuilleté quelconque résiste aux efforts correspondants au règlement R43 ; et
   - on fixe l'épaisseur e du deuxième élément de la façon suivante :

     - on identifie un vitrage feuilleté de référence, qui résiste aux efforts correspondant au règlement R43 et qui comporte deux feuilles de verre et un intercalaire constitué du matériau du deuxième élément ;
   - on détermine la résistance à la déchirure ($J_{c-ref}$) de l'intercalaire du vitrage feuilleté de référence, l'épaisseur d'intercalaire ($e_{i-ref}$) du vitrage feuilleté de référence et l'épaisseur de feuilles de verre ($e_{g-ref}$) du vitrage feuilleté de référence ;
   - à l'aide d'un graphique ($C_3$) représentatif de la résistance à la déchirure d'intercalaire minimale ($J_{c-min}$) requise pour qu'un vitrage feuilleté quelconque résiste aux efforts correspondants au règlement R43, en fonction de l'épaisseur d'intercalaire ($e_i$) du vitrage feuilleté quelconque, ce graphique étant établi pour une épaisseur de substrat du vitrage feuilleté quelconque égale à l'épaisseur de substrat dans le vitrage feuilleté de référence ($e_g = e_{g-ref}$), on déduit l'épaisseur d'intercalaire minimale requise ($e_{i-min}$) qui correspond à une valeur de résistance à la déchirure d'intercalaire minimale requise égale à la résistance à la déchirure de l'intercalaire du vitrage feuilleté de référence ($J_{c-min} = J_{c-ref}$) ;
   - on fixe l'épaisseur e du deuxième élément telle que e soit supérieure ou égale à ladite valeur optimale d'épaisseur d'intercalaire ($e_{i-opt}$).

6. Intercalaire plastique viscoélastique destiné à être incorporé entre deux feuilles de verre d'un vitrage pour lui procurer des propriétés d'amortissement vibro-acoustiques, l'intercalaire comprenant :

   - deux couches externes (4, 5) en matériau plastique viscoélastique dont le module de cisaillement G' est supérieur ou égal à $3.10^7$ Pa à 20°C et pour une gamme de fréquences comprise entre 100 Hz et 240 Hz,
   - une couche centrale (3) aux propriétés d'amortissement vibro-acoustique d'épaisseur h, telle que h est inférieure ou égale à 0,3 mm et que le paramètre de cisaillement g=G'/h de la couche centrale, G' étant le module de cisaillement, est compris entre $8.10^8$ Pa/m et $2,67.10^9$ Pa/m à 20°C et pour une gamme de fréquences comprise entre 100 Hz et 240 Hz,

la couche centrale (3) étant entre les deux couches externes (4, 5).

7. Intercalaire selon la revendication 6, dans lequel l'épaisseur h de la couche centrale (3) est telle que h est inférieure ou égale à 0,1 mm et que G'/h est compris entre $1,33.10^9$ Pa/m et $2.10^9$ Pa/m à 20°C et pour une gamme de fréquences comprise entre 100 Hz et 240 Hz.

**8.** Intercalaire selon la revendication 6 ou 7, dans lequel la couche centrale (3) a un facteur de perte tan δ supérieur à 0,6.

**9.** Intercalaire selon l'une des revendications 6 à 8, dans lequel les couches externes (4, 5) ont un module de cisaillement G' compris entre $10^8$ Pa et $2.10^8$ Pa à 20°C et pour une gamme de fréquences comprise entre 100 Hz et 240 Hz.

**10.** Intercalaire selon l'une des revendications 6 à 9, dans lequel chacune des couches externes (4, 5) a une épaisseur e telle que :

- l'adhésion du matériau des couches externes est compatible avec les exigences du règlement R43, l'adhésion étant déterminée en réalisant une torsion d'un échantillon d'intercalaire constitué du matériau des couches externes solidaire de deux feuilles de verre, en mesurant la force de torsion (F) pour laquelle la dissociation de l'intercalaire constitué du matériau des couches externes avec les feuilles de verre est amorcée, et en calculant à partir de cette force (F) la contrainte de cisaillement d'adhésion (τ) correspondante, puis en comparant cette valeur de la contrainte d'adhésion (τ) à une plage de valeurs admissibles pour qu'un vitrage feuilleté quelconque résiste aux efforts correspondant au règlement R43 ; et que

- l'épaisseur e de chacune des couches externes est fixée de façon à satisfaire aux exigences du règlement R43, l'épaisseur e étant déterminée de la façon suivante :

- on identifie un vitrage feuilleté de référence, qui résiste aux efforts correspondant au règlement R43 et qui comporte deux feuilles de verre et un intercalaire constitué du matériau des couches externes ;
- on détermine la résistance à la déchirure ($J_{c-ref}$) de l'intercalaire du vitrage feuilleté de référence, l'épaisseur d'intercalaire ($e_{i-ref}$) du vitrage feuilleté de référence et l'épaisseur de feuilles de verre ($e_{g-ref}$) du vitrage feuilleté de référence ;
- à l'aide d'un graphique ($C_3$) représentatif de la résistance à la déchirure d'intercalaire minimale ($J_{c-min}$) requise pour qu'un vitrage feuilleté quelconque résiste aux efforts correspondants au règlement R43, en fonction de l'épaisseur d'intercalaire ($e_i$) du vitrage feuilleté quelconque, ce graphique étant établi pour une épaisseur de substrat du vitrage feuilleté quelconque égale à l'épaisseur de substrat dans le vitrage feuilleté de référence ($e_g = e_{g-ref}$), on déduit l'épaisseur d'intercalaire minimale requise ($e_{i-min}$) qui correspond à une valeur de résistance à la déchirure d'intercalaire minimale requise égale à la résistance à la déchirure de l'intercalaire du vitrage feuilleté de référence ($J_{c-min} = J_{c-ref}$) ;
- on fixe l'épaisseur e de chaque couche externe telle que e soit supérieure ou égale à ladite valeur optimale d'épaisseur d'intercalaire ($e_{i-opt}$).

**11.** Intercalaire selon l'une des revendications 6 à 10, dans lequel la couche centrale comprend :

- un film amortissant (6) en matériau plastique viscoélastique A d'épaisseur $h_A$ et de paramètre de cisaillement $g_A$,
- un film amortissant (7) en matériau plastique viscoélastique B d'épaisseur $h_B$ et de paramètre de cisaillement $g_B$,

les matériaux A et B présentant chacun sur une gamme de températures respective $t_A$ et $t_B$ et pour une fréquence comprise entre 100 Hz et 240 Hz, un facteur de perte supérieur à 0,6 et un paramètre de cisaillement compris entre $8.10^8$ Pa/m et $2,67.10^9$ Pa/m, et le film (6 ou 7) qui présente le facteur de perte le plus élevé, pour une plage donnée de températures incluse dans la gamme de températures respectivement $t_A$ ou $t_B$, présentant un paramètre de cisaillement équivalent $g_{A ou B eq} = g_{A ou B}.h$, $g_{A ou B}$ étant le paramètre de cisaillement du matériau constituant le film (respectivement 6 ou 7) et h étant l'épaisseur de la couche centrale, qui est inférieur au paramètre de cisaillement équivalent de l'autre film (7 ou 6 respectivement) pour ladite plage de température.

**12.** Vitrage comprenant :

- une feuille de verre (1) d'épaisseur comprise entre 1,4 mm et 2,1 mm,
- une feuille de verre (2) d'épaisseur comprise entre 1,1 mm et 1,6 mm,
- un intercalaire (3, 4, 5) selon l'une quelconque des revendications 6 à 11, l'intercalaire étant entre les feuilles de verre (1, 2).

**13.** Vitrage selon la revendication 12, dans lequel l'épaisseur e de chacune des couches externes (4, 5) et l'épaisseur totale des feuilles de verre sont telle que :

- l'adhésion du matériau des couches externes est compatible avec les exigences du règlement R43, l'adhésion étant déterminée en réalisant une torsion d'un échantillon d'intercalaire constitué du matériau des couches externes solidaire de deux feuilles de verre, en mesurant la force de torsion (F) pour laquelle la dissociation de l'intercalaire constitué du matériau des couches externes avec les feuilles de verre est amorcée, et en calculant à partir de cette force (F) la contrainte de cisaillement d'adhésion ($\tau$) correspondante, puis en comparant cette valeur de la contrainte d'adhésion ($\tau$) à une plage de valeurs admissibles pour qu'un vitrage feuilleté quelconque résiste aux efforts correspondants au règlement R43 ; et que

- l'épaisseur e de chacune des couches externes et l'épaisseur totale des feuilles de verre sont fixées de façon à satisfaire aux exigences du règlement R43 ; elles sont déterminées de la façon suivante :

- on identifie un vitrage feuilleté de référence, qui résiste aux efforts correspondant au règlement R43 et qui comporte deux feuilles de verre et un intercalaire constitué du matériau des couches externes ;
- on détermine la résistance à la déchirure ($J_{c\text{-ref}}$) de l'intercalaire du vitrage feuilleté de référence, l'épaisseur d'intercalaire ($e_{i\text{-ref}}$) du vitrage feuilleté de référence et l'épaisseur de feuilles de verre ($e_{g\text{-ref}}$) du vitrage feuilleté de référence ;
- à l'aide d'un graphique ($C_4$) représentatif de la résistance à la déchirure d'intercalaire minimale ($J_{c\text{-min}}$) requise pour qu'un vitrage feuilleté quelconque résiste aux efforts correspondants au règlement R43, en fonction de l'épaisseur d'intercalaire ($e_i$) du vitrage feuilleté quelconque et de l'épaisseur de feuilles de verre ($e_g$) du vitrage feuilleté quelconque, on déduit une combinaison de valeurs optimales ($e_{i\text{-opt}}$, $e_{g\text{-opt}}$) de l'épaisseur d'intercalaire et de l'épaisseur de feuilles de verre qui correspond à une valeur de résistance à la déchirure d'intercalaire minimale requise égale à la résistance à la déchirure de l'intercalaire du vitrage feuilleté de référence ($J_{c\text{-min}} = J_{c\text{-ref}}$) ;
- on fixe l'épaisseur e de chaque couche externe telle que e soit supérieure ou égale à ladite valeur optimale d'épaisseur d'intercalaire ($e_{i\text{-opt}}$) et on fixe l'épaisseur des feuilles de verre ($e_{g\text{-dim}}$) supérieure ou égale à ladite valeur optimale d'épaisseur de feuilles de verre ($e_{g\text{-opt}}$).

14. Véhicule comprenant un vitrage selon la revendication 12 ou 13, la feuille de verre (1) d'épaisseur comprise entre 1,4 mm et 2,1 mm étant tournée vers l'extérieur du véhicule et la feuille de verre (2) d'épaisseur comprise entre 1,1 mm et 1,6 mm étant tournée vers l'intérieur du véhicule.

15. Utilisation de l'intercalaire selon l'une quelconque des revendications 6 à 11 pour l'amortissement vibro-acoustique des deuxième et troisième fréquences propres d'un pare-brise constitué de deux feuilles de verres et de l'intercalaire incorporé entre les feuilles de verre.

16. Utilisation du vitrage selon la revendication 12 ou 13 comme pare-brise de véhicule.

**Patentansprüche**

1. Auswahlverfahren einer viskoelastischen Zwischenschicht, die zwei externe Schichten (4, 5) und eine zentrale Schicht (3) umfasst und dazu bestimmt ist, zwischen zwei Glasscheiben (1, 2) einer Verglasung eingebaut zu werden, Verfahren umfassend die folgenden Schritte:

- Liefern eines ersten Elements aus viskoelastischem Kunststoff, das dazu bestimmt ist, die zentrale Schicht (3) zu bilden, und eines zweiten Elements aus viskoelastischem Kunststoff, das dazu bestimmt ist, die externen Schichten (4, 5) zu bilden,
- Messen des Schermoduls G' des ersten Elements und des zweiten Elements dank eines Visco-Analyzers,
- Auswählen des Materials des zweiten Elements nur, wenn sein Schermodul G' größer oder gleich $3.10^7$ Pa bei 20 °C und für einen Frequenzbereich zwischen 100 Hz und 240 Hz ist,
- Festlegen der Stärke h des ersten Elements derart, dass h kleiner oder gleich 0,3 mm ist und dass der Scherparameter g=G'/h, G', der gleich dem Schermodul ist, zwischen $8.10^8$ Pa/m und $2,67.10^9$ Pa/m bei 20 °C und für einen Frequenzbereich zwischen 100 Hz und 240 Hz ist.

2. Verfahren nach Anspruch 1, wobei die Stärke h des ersten Elements derart festgelegt wird, dass h kleiner oder gleich 0,1 mm ist, und dass G'/h zwischen $1,33.10^9$ Pa/m und $2.10^9$ Pa/m bei 20 °C und für einen Frequenzbereich zwischen 100 Hz und 240 Hz ist.

3. Verfahren nach Anspruch 1 oder 2, das außerdem vor dem Schritt des Festlegens der Stärke h folgende Schritte umfasst:

- Messen des Verlustfaktors tan $\delta$ des ersten Elements dank dem Visco-Analyzer,
- Auswählen des ersten Elements nur, wenn sein Verlustfaktor tan $\delta$ größer ist als 0,6.

4. Verfahren nach einem der Ansprüche 1 bis 3, das außerdem den folgenden Schritt umfasst:

- Auswählen des Materials des zweiten Elements nur, wenn das Schermodul G' zwischen $10^8$ Pa und $2.10^8$ Pa bei 20 °C und für einen Frequenzbereich zwischen 100 Hz und 240 Hz ist.

5. Verfahren nach Anspruch 4, das außerdem die folgenden Schritte umfasst:

- Prüfen, ob die Haftung des Materials des zweiten Elements mit den Auflagen der Vorschrift R43 übereinstimmt, indem eine Torsion eines Zwischenschichtmusters, bestehend aus dem Material des zweiten Elements, fest verbunden mit zwei Glasscheiben, ausgeführt wird, indem die Torsionskraft (F) gemessen wird, für die das Trennen der Zwischenschicht, gebildet aus dem Material des zweiten Elements mit den Glasscheiben eingeleitet wird, und durch Berechnen, ausgehend von dieser Kraft (F), der entsprechenden Scherhaftung ($\tau$), und Vergleichen dieses Werts der Haftungsbelastung ($\tau$) mit einem Bereich von Werten, die zulässig sind, damit eine beliebige Verbundverglasung den der Vorschrift R43 entsprechenden Kräften standhält, und
- Festlegen der Stärke e des zweiten Elements wie folgt:
- Identifizieren einer Referenz-Verbundverglasung, die den Kräften, die der Vorschrift R43 entsprechen, standhält und die zwei Glasscheiben und eine Zwischenschicht, gebildet aus dem Material des zweiten Elements, umfasst;
- Bestimmen der Reißfestigkeit ($J_{c-ref}$) der Zwischenschicht der Referenz-Verbundverglasung, der Stärke der Zwischenschicht ($e_{i-ref}$) der Referenz-Verbundverglasung und der Stärke der Glasscheiben ($e_{g-ref}$) der Referenz-Verbundverglasung;
- mit Hilfe einer Grafik ($C_3$), die für die Zwischenschicht-Mindestreißfestigkeit ($J_{c-min}$) repräsentativ ist, die erforderlich ist, damit eine beliebige Verbundverglasung den Kräften, die der Vorschrift R43 entsprechen, standhält, in Abhängigkeit von der Stärke der Zwischenschicht ($e_i$) der beliebigen Verbundverglasung, wobei diese Grafik für eine Substratstärke der beliebigen Verbundverglasung, die gleich der Substratstärke in der Referenz-Verbundverglasung ($e_g = e_{g-ref}$) ist, erstellt wird, Ableiten der erforderlichen Zwischenschicht-Mindeststärke ($e_{i-min}$), die einem Mindest-Zwischenschicht-Reißfestigkeitswert entspricht, der gleich der Reißfestigkeit der Zwischenschicht der Referenz-Verbundverglasung ($J_{c-min} = J_{c-ref}$) ist;
- Festlegen der Stärke e des zweiten Elements derart, dass sie größer oder gleich dem optimalen Zwischenschicht-Stärkenwert ($e_{i-opt}$) ist.

6. Zwischenschicht aus viskoelastischem Kunststoff, die dazu bestimmt ist, zwischen zwei Glasscheiben einer Verglasung eingebaut zu werden, um ihr vibroakustische Dämpfungseigenschaften zu verleihen, wobei die Zwischenschicht Folgendes umfasst:

- zwei externe Schichten (4, 5) aus viskoelastischem Kunststoff, deren Schermodul G' größer oder gleich $3.10^7$ Pa bei 20 °C und für einen Frequenzbereich zwischen 100 Hz und 240 Hz ist,
- eine zentrale Schicht (3), mit vibroakustischen Dämpfungseigenschaften mit Stärke h derart, dass h kleiner oder gleich 0,3 mm ist, und dass der Scherparameter g=G'/h der zentralen Schicht, wobei G' das Schermodul ist, zwischen $8.10^8$ Pa/m und $2,67.10^9$ Pa/m bei 20 °C und für einen Frequenzbereich zwischen 100 Hz und 240 Hz ist, wobei die zentrale Schicht (3) zwischen den zwei externen Schichten (4, 5) ist.

7. Zwischenschicht nach Anspruch 6, wobei die Stärke h der zentralen Schicht (3) derart ist, dass h kleiner oder gleich 0,1 mm ist, und dass G'/h zwischen $1,33.10^9$ Pa/m und $2.10^9$ Pa/m bei 20 °C und für einen Frequenzbereich zwischen 100 Hz und 240 Hz ist.

8. Zwischenschicht nach Anspruch 6 oder 7, wobei die zentrale Schicht (3) einen Verlustfaktor tan $\delta$ größer als 0,6 hat.

9. Zwischenschicht nach einem der Ansprüche 6 bis 8, wobei die externen Schichten (4, 5) ein Schermodul G' haben, das zwischen $10^8$ Pa und $2.10^8$ Pa bei 20 °C und für einen Frequenzbereich zwischen 100 Hz und 240 Hz ist.

10. Zwischenschicht nach einem der Ansprüche 6 bis 9, wobei jede der externen Schichten (4, 5) eine Stärke e derart hat, dass:

- die Haftung des Materials der externen Schichten mit den Forderungen der Vorschrift R43 kompatibel ist, wobei die Haftung unter Durchführen einer Torsion eines Zwischenschichtmusters bestehend aus dem Material der externen Schichten fest verbunden mit zwei Glasscheiben, ausgeführt wird, indem die Torsionskraft (F) gemessen wird, für die das Trennen der Zwischenschicht bestehend aus dem Material der externen Schichten mit den Glasscheiben, eingeleitet wird, und ausgehend von dieser Kraft (F) Berechnen der entsprechenden Haftungsscherbelastung ($\tau$), dann Vergleichen dieses

Werts der Haftungsbelastung ($\tau$) mit einem Bereich von Werten, die zulässig sind, damit eine beliebige Verbundverglasung den Kräften, die der Vorschrift R43 entsprechen, standhält, und dass

- die Stärke e jeder der externen Schichten derart festgelegt ist, dass sie die Forderungen der Vorschrift R43 erfüllt, wobei die Stärke e wie folgt bestimmt wird:
- Identifizieren einer Referenz-Verbundverglasung, die den Kräften, die der Vorschrift R43 entsprechen, standhält und zwei Glasscheiben und eine Zwischenschicht bestehend aus dem Material der externen Schichten, umfasst;
- Bestimmen der Reißfestigkeit ($J_{c-ref}$) der Zwischenschicht der Referenz-Verbundverglasung, der Stärke der Zwischenschicht ($e_{i-ref}$) der Referenz-Verbundverglasung und der Stärke der Glasscheiben ($e_{g-ref}$) der Referenz-Verbundverglasung;
- mit Hilfe einer Grafik ($C_3$), die für die Zwischenschicht-Mindestreißfestigkeit ($J_{c-min}$) repräsentativ ist, die erforderlich ist, damit eine beliebige Verbundverglasung den Kräften, die der Vorschrift R43 entsprechen, standhält, in Abhängigkeit von der Stärke der Zwischenschicht ($e_i$) der beliebigen Verbundverglasung, wobei diese Grafik für eine Substratstärke der beliebigen Verbundverglasung gleich der Substratstärke in der Referenz-Verbundverglasung ($e_g = e_{g-ref}$) erstellt wird, Ableiten der erforderlichen Zwischenschicht-Mindeststärke ($e_{i-min}$), die einem Mindest-Zwischenschicht-Reißfestigkeitswert entspricht, der gleich der Reißfestigkeit der Zwischenschicht der Referenz-Verbundverglasung ($J_{c-min} = J_{c-ref}$) ist;
- Bestimmen der Stärke e jeder externen Schicht derart, dass e größer oder gleich dem optimalen Zwischenschichtstärken wert ($e_{i-opt}$) ist.

11. Zwischenschicht nach einem der Ansprüche 6 bis 10, wobei die zentrale Schicht Folgendes umfasst:

- eine Dämpfungsfolie (6) aus viskoelastischem Kunststoff A mit Stärke $h_A$ und Scherparameter $g_A$,
- eine Dämpfungsfolie (7) aus viskoelastischem Kunststoff B mit Stärke $h_B$ und Scherparameter $g_B$,

wobei die Materialien A und B jeweils auf einem jeweiligen Temperaturbereich $t_A$ und $t_B$ und für eine Frequenz zwischen 100 Hz und 240 Hz einen Verlustfaktor größer als ä 0,6 aufweisen, und einen Scherparameter zwischen $8.10^8$ Pa/m und $2,67.10^9$ Pa/m, und wobei die Folie (6 oder 7), die den höchsten Verlustfaktor für einen gegebenen Temperaturbereich, der in dem jeweiligen Temperaturbereich $t_A$

oder $t_B$ enthalten ist, aufweist, einen Scherparameter gleich $g_{A\ oder\ B\ eq} = g_{A\ oder\ B}.h$, aufweist, wobei $g_{A\ oder\ B}$ der Scherparameter des Materials ist, das die Folie (jeweils 6 oder 7) bildet, und wobei h die Stärke der zentralen Schicht ist, die für den Temperaturbereich kleiner ist als der äquivalente Scherparameter der anderen Folie (jeweils 7 oder 6).

12. Verglasung, umfassend:

- eine Glasscheibe (1) mit Stärke zwischen 1,4 mm und 2,1 mm,
- eine Glasscheibe (2) mit Stärke zwischen 1,1 mm und 1,6 mm,
- eine Zwischenschicht (3, 4, 5) nach einem der Ansprüche 6 bis 11, wobei die Zwischenschicht zwischen den Glasscheiben (1, 2) liegt.

13. Verglasung nach Anspruch 12, wobei die Stärke e jeder der externen Schichten (4, 5) und die Gesamtstärke der Glasscheiben derart sind, dass:

- die Haftung des Materials der externen Schichten mit den Forderungen der Vorschrift R43 kompatibel ist, wobei die Haftung unter Durchführen einer Torsion eines Zwischenschichtmusters bestehend aus dem Material der externen Schichten fest verbunden mit zwei Glasscheiben, ausgeführt wird, indem die Torsionskraft (F) gemessen wird, für die das Trennen der Zwischenschicht bestehend aus dem Material der externen Schichten mit den Glasscheiben, eingeleitet wird, und ausgehend von dieser Kraft (F) Berechnen der entsprechenden Haftungsscherbelastung ($\tau$), dann Vergleichen dieses Werts der Haftungsbelastung ($\tau$) mit einem Bereich von Werten, die zulässig sind, damit eine beliebige Verbundverglasung den Kräften, die der Vorschrift R43 entsprechen, standhält, und dass

- die Stärke e jeder der externen Schichten und die Gesamtstärke der Glasscheiben derart festgelegt sind, dass sie die Forderungen der Vorschrift R43 erfüllen, wobei sie wie folgt bestimmt werden:
- Identifizieren einer Referenz-Verbundverglasung, die den Kräften, die der Vorschrift R43 entsprechen, standhält und zwei Glasscheiben und eine Zwischenschicht bestehend aus dem Material der externen Schichten, umfasst;
- Bestimmen der Reißfestigkeit ($J_{c-ref}$) der Zwischenschicht der Referenz-Verbundverglasung, der Stärke der Zwischenschicht ($e_{i-ref}$) der Referenz-Verbundverglasung und der Stärke der Glasscheiben ($e_{g-ref}$) der Referenz-Verbundverglasung;
- mit Hilfe einer Grafik (C4), die für die Zwischenschicht-Mindest-Reißfestigkeit ($J_{c-min}$) repräsentativ ist, die erforderlich ist, damit eine beliebige Verbundverglasung den Kräften, die der Vorschrift R43 entsprechen, standhält, in Abhängigkeit von der Zwischenschichtstärke ($e_i$) der beliebigen Verbundverglasung und der Stärke von Glasscheiben ($e_g$) der beliebigen Verbundverglasung, Ableiten einer Kombination optimaler Werte ($e_{i\text{-}opt}$, $e_{g\text{-}opt}$) der Zwischenschichtstärke und der Stärke von Glasschichten, die einem erforderlichen Mindest-Zwischenschicht-Reißfestigkeitswert der Referenz-Verbundverglasung ($J_{c\text{-}min} = J_{c\text{-}ref}$) entspricht;

- Festlegen der Stärke e jeder externen Schicht derart, dass e größer oder gleich dem optimalen Zwischenschicht-Stärkenwert ($e_{i\text{-}opt}$) ist, und Festlegen der Stärke der Glasscheiben ($e_{g\text{-}dim}$) größer oder gleich dem optimalen Glasscheibenstärkenwert ($e_{g\text{-}opt}$).

14. Fahrzeug, das eine Verglasung nach einem der Ansprüche 12 oder 13 umfasst, wobei die Glasscheibe (1) mit Stärke zwischen 1,4 und 2,1 mm zu der Außenseite des Fahrzeugs gerichtet ist, und die Glasscheibe (2) mit Stärke zwischen 1,1 und 1,6 mm zu dem Inneren des Fahrzeugs gerichtet ist.

15. Einsatz der Zwischenschicht nach einem der Ansprüche 6 bis 11 zum vibroakustischen Dämpfen der zweiten und dritten Eigenfrequenz einer Windschutzscheibe, die aus zwei Glasscheiben und der Zwischenschicht, die zwischen die Glasscheiben eingebaut ist, besteht.

16. Einsatz der Verglasung nach Anspruch 12 oder 13 als Fahrzeugwindschutzscheibe.

**Claims**

1. A method for selecting a viscoelastic plastic interlayer comprising two outer layers (4, 5) and a central layer (3) and intended to be incorporated between two sheets of glass (1, 2) of a glazing unit, the method comprising the following steps:

    - a first component made of a viscoelastic plastic material intended to constitute the central layer (3) and a second component made of a viscoelastic plastic material intended to constitute the outer layers (4, 5) are provided,
    - the shear modulus G' of the first component and of the second component are measured by means of a viscoanalyzer,
    - the material of the second component is only selected if its shear modulus G' is greater than or equal to $3 \times 10^7$ Pa at 20°C and for a frequency range between 100 Hz and 240 Hz; and

    - the thickness h of the first component is set so that h is less than or equal to 0.3 mm and so that the shear parameter g = G'/h, G' being the shear modulus, is between $8 \times 10^8$ Pa/m and $2.67 \times 10^9$ Pa/m at 20°C and for a frequency range between 100 Hz and 240 Hz.

2. The method as claimed in claim 1, wherein the thickness h of the first component is set so that h is less than or equal to 0.1 mm and so that G'/h is between $1.33 \times 10^9$ Pa/m and $2 \times 10^9$ Pa/m at 20°C and for a frequency range between 100 Hz and 240 Hz.

3. The method as claimed in claim 1 or 2, comprising, in addition, before the step of setting the thickness h, the following steps:

    - the loss factor tan $\delta$ of the first component is measured by means of the viscoanalyzer; and
    - the first component is selected only if its loss factor tan $\delta$ is greater than 0.6.

4. The method as claimed in one of claims 1 to 3, comprising, in addition, the following step:

    - the material of the second component is selected only if its shear modulus G' is between $10^8$ Pa and $2 \times 10^8$ Pa at 20°C and for a frequency range between 100 Hz and 240 Hz.

5. The method as claimed in claim 4, comprising, in addition, the following steps:

    - it is verified that the adhesion of the material of the second component is compatible with the requirements of Regulation R43 by twisting a specimen of the interlayer constituted of the material of the second component bonded to two glass sheets, by measuring the torsional force (F) at which separation of the interlayer constituted of the material of the second component from the glass sheets is initiated, and by calculating from this force (F) the corresponding adhesive shear strength ($\tau$), and this value of the adhesive strength ($\tau$) is compared with a range of admissible values so that any laminated glazing unit withstands the stresses corresponding to Regulation R43; and
    - the thickness e of the second component is set in the following manner:

        - a reference laminated glazing unit is identified that withstands the stresses corresponding to Regulation R43 and which comprises two sheets of glass and an interlayer constituted of the material of the second component;
        - the tear strength ($J_{c\text{-}ref}$) of the interlayer of the reference laminated glazing unit, the thickness ($e_{i\text{-ref}}$) of the interlayer of the reference laminated glazing unit and the thickness ($e_{g\text{-ref}}$) of the glass sheets of the reference laminated glazing unit are determined;

- using a graph ($C_3$) representative of the minimum interlayer tear strength ($J_{c\text{-min}}$) required so that any laminated glazing unit withstands the stresses corresponding to Regulation R43, as a function of the interlayer thickness ($e_i$) of any laminated glazing unit, this graph being established for a substrate thickness of any laminated glazing unit equal to the substrate thickness in the reference laminated glazing unit ($e_g = e_{g\text{-ref}}$), the minimum required interlayer thickness ($e_{i\text{-min}}$) is deduced which corresponds to a minimum required interlayer tear strength value equal to the tear strength of the interlayer of the reference laminated glazing unit ($J_{c\text{-min}} = J_{c\text{-ref}}$); and

- the thickness e of the second component is set so that e is greater than or equal to said optimum interlayer thickness value ($e_{i\text{-opt}}$).

6. A viscoelastic plastic interlayer intended to be incorporated between two glass sheets of a glazing unit in order to give it vibroacoustic damping properties, the interlayer comprising:

- two outer layers (4, 5) made of a viscoelastic plastic material, the shear modulus G' of which is greater than or equal to $3 \times 10^7$ Pa at 20°C and for a frequency range between 100 Hz and 240 Hz,

- a central layer (3) having vibroacoustic damping properties, of thickness h, so that h is less than or equal to 0.3 mm and so that the shear parameter g = G'/h of the central layer, G' being the shear modulus, is between $8 \times 10^8$ Pa/m and $2.67 \times 10^9$ Pa/m at 20°C and for a frequency range between 100 Hz and 240 Hz,

the central layer (3) being between the two outer layers (4, 5).

7. The interlayer as claimed in claim 6, wherein the thickness h of the central layer (3) is such that h is less than or equal to 0.1 mm and such that G'/h is between $1.33 \times 10^9$ Pa/m and $2 \times 10^9$ Pa/m at 20°C and for a frequency range between 100 Hz and 240 Hz.

8. The interlayer as claimed in claim 6 or 7, wherein the central layer (3) has a loss factor tan $\delta$ greater than 0.6.

9. The interlayer as claimed in one of claims 6 to 8, wherein the outer layers (4, 5) have a shear modulus G' between $10^8$ Pa and $2 \times 10^8$ Pa at 20°C and for a frequency range between 100 Hz and 240 Hz.

10. The interlayer as claimed in one of claims 6 to 9, wherein each of the outer layers (4,5) has a thickness e such that:

- the adhesion of the material of the outer layers is compatible with the requirements of Regulation R43, the adhesion being determined by twisting a specimen of interlayer constituted of the material of the outer layers bonded to two glass sheets, by measuring the torsional force (F) for which the separation of the interlayer constituted of the material of the outer layers from the glass sheets is initiated, and by calculating, from this force (F), the corresponding adhesive shear strength ($\tau$), then by comparing this value of the adhesive strength ($\tau$) to a range of admissible values so that any laminated glazing unit withstands the stresses corresponding to Regulation R43; and such that

- the thickness e of each of the outer layers is set so as to satisfy the requirements of Regulation R43, the thickness e being determined in the following manner:

- a reference laminated glazing unit is identified which withstands the stresses corresponding to Regulation R43 and which comprises two glass sheets and an interlayer constituted of the material of the outer layers;

- the tear strength ($J_{c\text{-ref}}$) of the interlayer of the reference laminated glazing unit, the thickness ($e_{i\text{-ref}}$) of the interlayer of the reference laminated glazing unit and the thickness ($e_{g\text{-ref}}$) of the glass sheets of the reference laminated glazing unit are determined;

- using a graph ($C_3$) representative of the minimum interlayer tear strength ($J_{c\text{-min}}$) required so that any laminated glazing unit withstands the stresses corresponding to Regulation R43, as a function of the interlayer thickness ($e_i$) of any laminated glazing unit, this graph being established for a substrate thickness of any laminated glazing unit equal to the substrate thickness in the reference laminated glazing unit ($e_g = e_{g\text{-ref}}$), the minimum required interlayer thickness ($e_{i\text{-min}}$) is deduced which corresponds to a minimum required interlayer tear strength value equal to the tear strength of the interlayer of the reference laminated glazing unit ($J_{c\text{-min}} = J_{c\text{-ref}}$); and

- the thickness e of each outer layer is set so that e is greater than or equal to said optimum interlayer thickness value ($e_{i\text{-opt}}$).

11. The interlayer as claimed in one of claims 6 to 10, wherein the central layer comprises:

    - a damping film (6) made of a viscoelastic plastic material A of thickness $h_A$ and with a shear parameter $g_A$;
    - a damping film (7) made of a viscoelastic plastic material B of thickness $h_B$ and with a shear parameter $g_B$,

    the materials A and B each having, over a respective temperature range $t_A$ and $t_B$ and for a frequency between 100 Hz and 240 Hz, a loss factor greater than 0.6 and a shear parameter between $8 \times 10^8$ Pa/m and $2.67 \times 10^9$ Pa/m, and the film (6 or 7) which has the highest loss factor, for a given range of temperatures included within the temperature range $t_A$ or $t_B$ respectively, has an equivalent shear parameter $g_{A \text{ or } B \text{ eq}} = g_{A \text{ or } B} \times h$, $g_{A \text{ or } B}$ being the shear parameter of the material constituting the film (respectively 6 or 7) and h being the thickness of the central layer, which is less than the equivalent shear parameter of the other film (7 or 6 respectively) for said temperature range.

12. A glazing unit comprising:

    - a glass sheet (1) having a thickness between 1.4 mm and 2.1 mm,
    - a glass sheet (2) having a thickness between 1.1 mm and 1.6 mm, and
    - an interlayer (3, 4, 5) as claimed in any one of claims 6 to 11, the interlayer being between the glass sheets (1, 2).

13. The glazing unit as claimed in claim 12, wherein the thickness e of each of the outer layers (4, 5) and the total thickness of the glass sheets are such that:

    - the adhesion of the material of the outer layers is compatible with the requirements of Regulation R43, the adhesion being determined by twisting a specimen of interlayer constituted of the material of the outer layers bonded to two glass sheets, by measuring the torsional force (F) for which the separation of the interlayer constituted of the material of the outer layers from the glass sheets is initiated, and by calculating, from this force (F), the corresponding adhesive shear strength ($\tau$), then by comparing this value of the adhesive strength ($\tau$) to a range of admissible values so that any laminated glazing unit withstands the stresses corresponding to Regulation R43; and such that

    - the thickness e of each of the outer layers and the total thickness of the glass sheets are set so as to satisfy the requirements of Regulation R43; they are determined in the following manner:

        - a reference laminated glazing unit is identified which withstands the stresses corresponding to Regulation R43 and which comprises two glass sheets and an interlayer constituted of the material of the outer layers;
        - the tear strength ($J_{c\text{-ref}}$) of the interlayer of the reference laminated glazing unit, the thickness ($e_{i\text{-ref}}$) of the interlayer of the reference laminated glazing unit and the thickness ($e_{g\text{-ref}}$) of the glass sheets of the reference laminated glazing unit are determined;
        - using a graph ($C_4$) representative of the minimum interlayer tear strength ($J_{c\text{-min}}$) required so that any laminated glazing unit withstands the stresses corresponding to Regulation R43, as a function of the interlayer thickness ($e_i$) of any laminated glazing unit, and of the thickness of glass sheets ($e_g$) of any laminated glazing unit, a combination of optimum values ($e_{i\text{-opt}}$, $e_{g\text{-opt}}$) of the interlayer thickness and of the thickness of glass sheets is deduced which corresponds to a minimum required interlayer tear strength value equal to the tear strength of the interlayer of the reference laminated glazing unit ($J_{c\text{-min}} = J_{c\text{-ref}}$); and
        - the thickness e of each outer layer is set so that e is greater than or equal to said optimum interlayer thickness value ($e_{i\text{-opt}}$) and the thickness of the glass sheets ($e_{g\text{-dim}}$) is set greater than or equal to said optimum glass sheet thickness value ($e_{g\text{-opt}}$).

14. A vehicle comprising a glazing unit as claimed in claim 12 or 13, the glass sheet (1) having a thickness between 1.4 mm and 2.1 mm being turned toward the outside of the vehicle and the glass sheet (2) having a thickness between 1.1 mm and 1.6 mm being turned toward the inside of the vehicle.

15. The use of the interlayer as claimed in any one of claims 6 to 11 for the vibroacoustic damping of the second and third natural frequencies of a windshield constituted of two glass sheets and the interlayer incorporated between the glass sheets.

16. The use of the glazing unit as claimed in claim 12 or 13 as a vehicle windshield.

Fig.1

Epaisseur (mm)
- 0,05
- 0,10
- 0,15
- 0,20
- 0,25
- 0,30

Amortissement modal

Paramètre de cisaillement G/h (Pa/m)

# Fig.4

◇ hauteur de chute 4m
composition 2,1/2,1
adhésion comprise
entre 2MPa et 4MPa

# Fig.5

(ei-opt, eg-opt, Jc-ref)

Résistance à la
déchirure (Jc-min)
[J/m$^2$]

C4

Adhésion comprise
entre 2MPa et 5MPa

Epaisseurs de
verres (eg) [mm/mm]

Epaisseur de l'intercalaire (ei)
[mm]

| ▨ 0-5000 | ▦ 5000-10000 | ☐ 10000-15000 | ▨ 15000-20000 |
|---|---|---|---|
| ▦ 20000-25000 | ▨ 25000-30000 | ▨ 30000-35000 | ■ 35000-40000 |

Fig.2

Fig.3

Fig.6

Fig.7

Fig.8

**EP 2 432 637 B1**